(19) Europäisches Patentamt
European Patent Office
Office européen des brevets

(11) EP 4 700 099 A1

(12) EUROPEAN PATENT APPLICATION

(43) Date of publication:
**25.02.2026 Bulletin 2026/09**

(21) Application number: **24196212.5**

(22) Date of filing: **23.08.2024**

(51) International Patent Classification (IPC):
***C09K 5/10*** *(2006.01)* ***C23F 11/12*** *(2006.01)*
***H01M 8/04029*** *(2016.01)*

(52) Cooperative Patent Classification (CPC):
**C09K 5/10; C23F 11/10; C23F 11/149; C23F 11/165; H01M 8/04029**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Arteco NV**
**2900 Schoten (BE)**

(72) Inventor: **SANDER Clerick**
**9820 Merelbeke (BE)**

(74) Representative: **Nederlandsch Octrooibureau**
**P.O. Box 29720**
**2502 LS The Hague (NL)**

(54) **AROMATIC COMPOUNDS IN LOW CONDUCTIVE HEAT-TRANSFER FLUIDS**

(57) The present invention relates to heat-transfer fluids comprising azole-type corrosion inhibitors alongside specific aromatic compounds according to formula (I) and having a pKa of less than 9.0 which act as protecting agents when the heat-transfer fluid is placed in contact with ion-exchange resins, thereby preventing the uptake of desired additives like corrosion inhibitors. The invention further relates to associated methods, compositions and uses.

EP 4 700 099 A1

## Description

### Field of the Invention

The present invention relates to heat-transfer fluids which comprise azole-type corrosion inhibitors alongside specific aromatic compounds according to formula (I) and having a pKa of less than 9.0. The invention further relates to methods of exchanging heat which comprises circulating such heat-transfer fluids through a cooling system comprising an ion-exchange resin. The invention further relates to assemblies comprising said heat-transfer fluids and to uses thereof, for example in battery or fuel cell electric vehicles.

### Background Art

Heat-transfer fluids are widely employed in heat exchange systems associated with internal combustion engines, solar systems, fuel cells, electrical motors, generators, electronic equipment, battery equipment, and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. The additives present in heat-transfer fluids may be employed to obtain a variety of functionalities, such as (further) lowering of the freezing point, improving the heat-exchange properties, inhibiting corrosion, et cetera. Since heat-transfer fluids are in continuous contact with metal parts (aluminium alloys, cast iron, steel, copper, brass, solder, et cetera) they nearly always contain one or more corrosion inhibitors.

The development and increased use of alternative energy technologies, such as battery electric or fuel cell electric vehicles and power plants, which are an attractive alternative to combustion engines due to their relatively low output of pollutants, brings with it the need for a new type of heat-transfer fluids.

Fuel cells are electrochemical cells in which the chemical energy stored is converted to electrical energy by controlled oxidation of the fuel. In most applications, several electrochemical cells are stacked together in series into a so-called fuel cell stack, allowing higher voltages to be generated. Heat generated by the fuel cell stack can be removed by flowing heat-transfer fluid through channels formed by the bipolar plates.

The potential difference between the positive and negative ends of the fuel cell stack may cause a shunt current to flow through the heat-transfer fluid, thus reducing the voltage of the fuel cell. In addition to the deleterious loss of voltage, shunt currents cause additional problems, such as corrosion of the separator plate near the positive end of a fuel cell stack.

Batteries are electrochemical cells in which the chemical energy stored is converted to electrical energy by redox reactions. In most applications, several electrochemical cells are placed together in series into a so-called battery pack, allowing higher voltages to be generated. Heat generated by the battery pack can be removed by flowing heat-transfer fluid through channels within, or outside the battery pack.

In case of contact between the heat transfer fluid and the current collectors (tabs) of the battery pack, safety critical events like short-circuits or electrolysis (leading to formation of flammable hydrogen gas) may occur.

In electrical machines such as electromotors, the heat transfer fluid may come in contact with current carrying parts, like copper windings. In such cases, power loss or short-circuit could lead to failure of the device.

Hence, heat-transfer fluids for use in electrical applications, such as battery and fuel cells, need to have low electrical conductivity (i.e. high electrical resistance) and should be capable of maintaining this throughout the lifetime of the heat-transfer fluid.

Most known heat-transfer fluids (e.g. coolants) have been specifically designed for internal combustion engines and are not suitable for use in electrical applications, where low electrical conductivity is required for safety reasons, such as fuel cells, batteries, electrical machines or power electronics, because they (i) possess high electrical conductivity, or (ii) become significantly more electrically conductive upon aging, especially at increased temperatures. The increase in electrical conductivity upon aging is generally attributed to the formation of ionic compounds due to degradation of alcohols, particularly glycols, which are often used as a base fluid, due to degradation of additives, due to metal corrosion and/or due to impurities in the cooling circuit.

Hence, in recent years there has been an increased interest in developing heat-transfer fluids which are better suited for use in electrical applications, such as fuel cells, batteries (e.g. battery farms), electrical machines, data centers or power electronics.

In order to maintain low conductivity for a prolonged time, in addition to employing specifically designed heat-transfer fluids, it has also become common to integrate an ion-exchange resin into the cooling circuit, such that the heat-transfer fluid passes through the ion-exchange resin when it is being circulated. The ion-exchange resin functions to remove ionic contaminants formed upon aging of the heat-transfer fluid, such as glycolates (ionic degradation products of glycols which are formed upon aging and which increase the conductivity of the heat-transfer fluid). Heat transfer fluids typically contain ionic or non-ionic additives which fulfil multiple functions such as protection against corrosion, pH control,

reduction of oxidation processes in the fluid, dispersing particulate matter as well as dyes to identify the fluid. The present inventors have found that the use of such ion-exchange resins results in the undesirable removal of polar non-ionic and ionic additives from the heat transfer fluid, thereby reducing or removing the desired properties afforded by such additives. For instance, triazoles are used as red metal corrosion inhibitors but are removed from the heat-transfer fluid by the ion-exchange resin. Consequently, higher concentrations of such additives (e.g. triazoles) need to be used to compensate for the loss due to the ion-exchange resin, or the performance of the product is simply decreased.

US8951689B2 discloses a coolant circulation channel with an ion-exchange resin. As a coolant comprising an inhibitor such as mercaptobenzothiazole flows through the circulation channel, the ion-exchange resin removes and adsorbs ions generated in the coolant.

EP1501140A1 discloses fuel cell coolants which may contain one of a variety of phenolic compounds.

It is an object of the present invention to provide heat-transfer fluids which allow electrical conductivity of the heat-transfer fluid to be maintained.

It is an object of the present invention to provide heat-transfer fluids with improved compatibility with ion-exchange resins.

It is an object of the present invention to provide heat-transfer fluids which limit or prevent the undesirable removal or one or more additives (such as corrosion inhibitors) by an ion-exchange resin.

It is an object of the present invention to provide methods of exchanging heat and associated compositions which improve the compatibility of low conductive heat-transfer fluids with ion-exchange resins.

## Summary of the invention

The present inventors have surprisingly found that aromatic compounds according to formula (I), (II) or (III) and having a pKa of less than 9.0 act as protecting agents for azole-type corrosion inhibitors when used in low conductivity heat-transfer fluids when placed in contact with ion-exchange resins. Such aromatic compounds reduce and/or prevent the uptake of desired functional additives present in the heat-transfer fluid, in particular of azole-type corrosion inhibitors. In addition, the aromatic compounds according to formula (I), (II) or (III) and having a pKa of less than 9.0 do not significantly increase the electrical conductivity. Furthermore, as is shown in the appended examples, the mixtures maintain a low electrical conductivity which does not alter substantially with aging. Surprisingly, the ion-exchange resin can still perform its desired function of absorbing conductivity-increasing products which form upon aging, such as glycolates. Without wishing to be bound by theory, the present inventors believe that this is because the affinity of ion-exchange resins for the aromatic compounds is greater than for the additives in the heat-transfer fluid but lower than for the oxidative degradation products of the base fluid, such as glycolates. One or more objects of the invention are achieved by the different aspects of the invention described herein.

Hence, in a first aspect the present invention provides a heat-transfer fluid comprising:

- a base fluid consisting of water, an alcohol or mixtures thereof,
- a corrosion inhibitor selected from the group consisting of triazoles, thiazoles, triazines and combinations thereof, and
- at least one aromatic compound according to formula (I), (II) or (III):

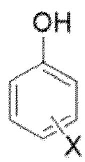
(I)

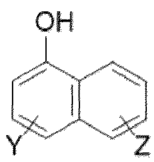
(II)

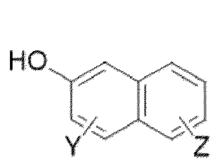
(III)

wherein

X, Y and Z each represent 1 to 3 substituents independently selected from the group consisting of $-R^1$, -F, -Cl, -Br, -I, -OH, $-OR^2$, $-R^3-OH$, $-NO_2$, -CN, -SH, $-SR^2$, $-SO_3H$, $-SO_3R^2$, $-SO_2CF_3$, $-NH_2$, $-NHR^2$, $-N(R^2)_2$, $-N^+(R^2)_3$, -COH, $-COR^4$, $-COR^2$, $-CO_2H$, $-CO_2R^2$, $-CONH_2$, $-(CONH)R^2$, $-(CON)R^2_2$, $-(CONR^2)-OH$, -(CONH)-OH, $-(NHCO)R^{2'}$, $-(NHCOO)R^{2'}$, $-(NHCONH)R^{2'}$, $-PH_2O_3$, $-R^3OR^{2'}$, $-R^3(CO)R^{2'}$, $-R^3(COO)R^{2'}$, $-R^3(CONH)R^{2'}$, $-R^3(NHCO)R^{2'}$, $-R^3(NHCOO)R^{2'}$, $-R^3(NHCONH)R^{2'}$, $-N=CR^{2'}R^{2'}$, $-N=CR^{2''}$, $-CR^4_3$, -N=O, $-R^5-(C_6H_4OH)$;

Y and Z together represent at most 3 substituents;

each occurrence of $R^1$ is individually selected from optionally substituted monovalent hydrocarbon radicals having from 1 to 20 carbon atoms, preferably each occurrence of $R^1$ is individually selected from the group consisting of $C_1$-$C_{20}$ alkyl, $C_1$-$C_{20}$ haloalkyl, $C_1$-$C_{20}$ alkyl alcohol, $C_1$-$C_{20}$ aminoalkyl, $C_2$-$C_{20}$ alkenyl, $C_1$-$C_{20}$ sulfide, more preferably each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, - $(OCH_2CH_2)_pCH_3$, $-(OCHCH_3CH_2)_qCH_3$, $-(OCH_3)_rCH_3$, preferably each occurrence of $R^2$ is individually selected from the group consisting of $C_1$-$C_{20}$ alkyl, more preferably each occurrence of $R^2$ is individually selected from the group consisting of $C_1$-$C_4$ alkyl;

each occurrence of $R^{2'}$ is individually selected from the group consisting of hydrogen, $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, - $(OCH_2CH_2)_pCH_3$, $-(OCHCH_3CH_2)_qCH_3$, $-(OCH_3)_rCH_3$, preferably each occurrence of $R^{2'}$ is individually selected from the group consisting of hydrogen, $C_1$-$C_{20}$ alkyl, more preferably each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl;

each occurrence of $R^3$ is individually selected from the group consisting of bivalent $C_1$-$C_{20}$ alkyl radicals, preferably each occurrence of $R^3$ is individually selected from the group consisting of bivalent $C_1$-$C_8$ alkyl radicals, more preferably each occurrence of $R^3$ is individually selected from the group consisting of bivalent $C_1$-$C_4$ alkyl radicals;

each occurrence of $R^4$ is individually selected from the group consisting of halogens, preferably each occurrence of $R^4$ is individually selected from the group consisting of - F, -Cl, and -Br, more preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals;

characterized in that a pKa value of the aromatic compound is less than 9.0 and the electrical conductivity of the heat-transfer fluid is less than 100 $\mu$S/cm, preferably less than 50 $\mu$S/cm, more preferably less than 25 $\mu$S/cm, more preferably less than 10 $\mu$S/cm, most preferably less than 5 $\mu$S/cm.

A corrosion inhibitor selected from the group consisting of triazoles, thiazoles, triazines and combinations thereof is also referred to herein as an azole-type corrosion inhibitor. For the avoidance of doubt, the alcohol of the base fluid is different from the aromatic compound defined by formula (I), (II) or (III) which also has a hydroxyl group. Preferred base fluid alcohols are explained herein elsewhere.

In preferred embodiments, the heat-transfer fluid comprises a base fluid consisting of water and an alcohol.

The expression "the aromatic compound" is used herein to denote the aromatic compound as defined herein which is according to formula (I), (II) or (III) and has a pKa of less than 9.0, as well as any of the preferred embodiments thereof which are set out throughout this document. In general, it is highly preferred that the aromatic compound is according to formula (I) and has a pKa of less than 9.0.

In preferred embodiments, the heat-transfer fluid comprises at least 0.05 wt.% of the aromatic compound, by total weight of the heat-transfer fluid, preferably at least 0.1 wt.%, more preferably at least 0.2 wt.%, more preferably at least 0.25 wt.%, more preferably at least 0.4 wt.%.

In preferred embodiments, the aromatic compound is selected from those having a molecular weight of less than 500 g/mol, preferably less than 400 g/mol, preferably less than 200 g/mol.

In preferred embodiments, the heat-transfer fluid is provided, wherein the weight ratio of the aromatic compound to the corrosion inhibitor (by total weight of the heat-transfer fluid) is at least 1:2, preferably at least 1:1, more preferably at least 2:1.

In another aspect of the invention, there is provided a method for exchanging heat, the method comprising the steps of:

a. providing a heat-transfer fluid as described herein;

b. providing a cooling system configured for thermally contacting the heat-transfer fluid with an electrical system, the cooling system comprising an ion-exchange resin;

c. transferring heat from the electrical system to the heat-transfer fluid; and

d. contacting the heat-transfer fluid with the ion-exchange resin.

The ion-exchange resin preferably comprises a cation-exchange resin. The ion-exchange resin is preferably a mixed resin comprising anion-exchange and cation-exchange functionalities.

In preferred embodiments, the volume ratio of the heat-transfer fluid to the ion-exchange resin is at least 1:99 v/v%, preferably at least 5:95 v/v%, more preferably at least 10:90 v/v% and most preferably at least 20:80 v/v%.

In a further aspect of the invention, there is provided the use of a heat-transfer fluid comprising an aromatic compound which is according to formula (I), (II) or (III) and has a pKa of less than 9.0, preferably the use of a heat-transfer fluid as described herein, as a heat-transfer fluid in a cooling system comprising an ion-exchange resin; wherein the electrical conductivity at 25 °C of the heat-transfer fluid is less than 100 μS/cm, preferably less than 50 μS/cm, more preferably less than 25 μS/cm, more preferably less than 10 μS/cm, most preferably less than 5 μS/cm.

In another aspect of the invention, there is provided the use of an aromatic compound which is according to formula (I), (II) or (III) and has a pKa of less than 9.0:

- for prolonging the corrosion inhibiting properties of a heat-transfer fluid comprising a corrosion inhibitor when contacting an ion-exchange resin, preferably when used as a heat-transfer fluid in a cooling system comprising an ion-exchange resin in contact with the heat-transfer fluid;
- for reducing the amount of corrosion inhibitor used in a heat-transfer fluid comprising when contacting an ion-exchange resin, preferably when used as a heat-transfer fluid in a cooling system comprising an ion-exchange resin in contact with the heat-transfer fluid;
- for extending the service life interval of an ion-exchange resin when contacting a heat-transfer fluid by reducing or avoiding uptake of heat-transfer fluid components, preferably when used in a cooling system comprising an ion-exchange resin in contact with the heat-transfer fluid;
- for extending the service life interval of a heat-transfer fluid comprising a corrosion inhibitor (and preferably comprising an alcohol as described herein) and/or an ion-exchange resin contacting the heat-transfer fluid by

    ◦ reducing, postponing or avoiding corrosion;
    ◦ reducing, postponing or avoiding the formation of electrically conductive acids such as glycolates;

  preferably when the heat-transfer fluid is used in a cooling system comprising an ion-exchange resin in contact with the heat-transfer fluid.

## Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound, unless explicitly defined otherwise.

The term "alkyl" as used herein includes straight, branched and cyclic alkyls.

Reference is made to substances, components, or ingredients in existence at the time just before first contacted, blended, or mixed with one or more other substances, components, or ingredients in accordance with the present disclosure. A substance, component or ingredient may gain an identity, property, or character through a chemical reaction or transformation during the course of contacting, blending, or mixing if conducted in accordance with this disclosure with the application of common sense and the ordinary skills of an average chemist. Definitions of substances, components, or

ingredients and their relative amounts concern the heat-transfer fluids as it is prepared at the time of first contacting the ingredients, unless expressly indicated otherwise.

Electrical conductivity as referred to herein is preferably measured in accordance with ASTM D1125-23 preferably with a Mettler-Toledo SevenExcellence Cond meter S700-Std-Kit electrical conductivity meter equipped with a SevenExcellence Cond meter S700-Std-Kit.

The term 'thermal contact' refers to any arrangement that allows heat produced by the electrical system to be transferred to the heat-transfer fluid or composition thereof by heat transfer.

***Heat-transfer fluid***

In a first aspect of the invention, there is provided a heat-transfer fluid comprising:

- a base fluid consisting of water, an alcohol or mixtures thereof,
- a corrosion inhibitor selected from the group consisting of triazoles, thiazoles, triazines, and combinations thereof, and
- at least one aromatic compound according to formula (I), (II) or (III):

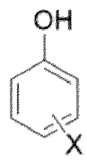 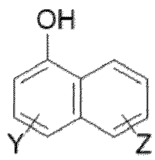 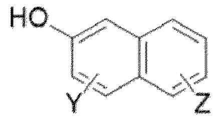

(I) (II) (III)

wherein

X, Y and Z each represent 1 to 3 substituents independently selected from the group consisting of $-R^1$, -F, -Cl, -Br, -I, -OH, $-OR^2$, $-R^3-OH$, $-NO_2$, -CN, -SH, $-SR^2$, $-SO_3H$, $-SO_3R^2$, $-SO_2CF_3$, $-NH_2$, $-NHR^2$, $-N(R^2)_2$, $-N^+(R^2)_3$, -COH, $-COR^4$, $-COR^2$, $-CO_2H$, $-CO_2R^2$, $-CONH_2$, $-(CONH)R^2$, $-(CON)R^2_2$, $-(CONR^2)-OH$, -(CONH)-OH, $-(NHCO)R^{2'}$, $-(NHCOO)R^{2'}$, $-(NHCONH)R^{2'}$, $-PH_2O_3$, $-R^3OR^{2'}$, $-R^3(CO)R^{2'}$, $-R^3(COO)R^{2'}$, $-R^3(CONH)R^{2'}$, $-R^3(NHCO)R^{2'}$, $-R^3(NHCOO)R^{2'}$, $-R^3(NHCONH)R^{2'}$, $-N{=}CR^{2'}R^{2'}$, $-N{=}CR^{2''}$, $-CR^4_3$, -N=O, $-R^5-(C_6H_4OH)$;

Y and Z together represent at most 3 substituents;

each occurrence of $R^1$ is individually selected from optionally substituted monovalent hydrocarbon radicals having from 1 to 20 carbon atoms, preferably each occurrence of $R^1$ is individually selected from the group consisting of $C_1$-$C_{20}$ alkyl, $C_1$-$C_{20}$ haloalkyl, $C_1$-$C_{20}$ alkyl alcohol, $C_1$-$C_{20}$ aminoalkyl, $C_2$-$C_{20}$ alkenyl, $C_1$-$C_{20}$ sulfide, more preferably each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, $-(OCH_2CH_2)_pCH_3$, $-(OCHCH_3CH_2)_qCH_3$, $-(OCH_3)_rCH_3$, preferably each occurrence of $R^2$ is individually selected from the group consisting of $C_1$-$C_{20}$ alkyl, more preferably each occurrence of $R^2$ is individually selected from the group consisting of $C_1$-$C_4$ alkyl;

each occurrence of $R^{2'}$ is individually selected from the group consisting of hydrogen, $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, $-(OCH_2CH_2)_pCH_3$, $-(OCHCH_3CH_2)_qCH_3$, $-(OCH_3)_rCH_3$, preferably each occurrence of $R^{2'}$ is individually selected from the group consisting of hydrogen, $C_1$-$C_{20}$ alkyl, more preferably each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N{=}CR^{2''}$ is a cycloalkyl;

each occurrence of $R^3$ is individually selected from the group consisting of bivalent $C_1$-$C_{20}$ alkyl radicals, preferably each occurrence of $R^3$ is individually selected from the group consisting of bivalent $C_1$-$C_8$ alkyl radicals, more preferably each occurrence of $R^3$ is individually selected from the group consisting of bivalent $C_1$-$C_4$ alkyl radicals;

each occurrence of $R^4$ is individually selected from the group consisting of halogens, preferably each occurrence of $R^4$

is individually selected from the group consisting of - F, -Cl, and -Br, more preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals;

characterized in that a pKa value of the aromatic compound is less than 9.0 and the electrical conductivity of the heat-transfer fluid is less than 100 μS/cm, preferably less than 50 μS/cm, more preferably less than 25 μS/cm, more preferably less than 10 μS/cm, most preferably less than 5 μS/cm.

The heat-transfer fluid preferably has a pH in the range of 3 to 10, preferably in the range of 3 to 9, most preferably in the range of 3 to 7. The heat-transfer fluid preferably has a pH of at least 4, preferably at least 5.

*The aromatic compound*

In accordance with the invention, the aromatic compound is selected from the group consisting of compounds according to formula (I), (II) or (III) which have a pKa value of less than 9.0.

It is within the remit of the routine capabilities of the skilled person to obtain pKa values for the compounds defined by formula (I), (II) or (III) either from textbook tables or using chemical calculation software. In particular, pKa values referred to herein may be calculated using PerkinElmer® ChemDraw Professional version 16.0.

As is shown in the appended examples, the inventors have found that if the aromatic compound has a pKa value of less than 9.0, strong protection for the azole-type corrosion inhibitors from being absorbed by an ion-exchange resin is provided, while the ion-exchange resin can still exert its desired function, such as the removal of glycolate ions. Hence, the invention requires the aromatic compound according to formula (I) to have a pKa value of less than 9.0, preferably less than 8.8.

In highly preferred embodiments of the invention the pKa value of the hydroxide group which is shown in formula (I), (II) or (III) is less than 9.0, preferably less than 8.8.

In preferred embodiments of the invention the aromatic compound has a single exchangeable hydrogen, the pKa of this exchangeable hydrogen being less than 9.0, preferably less than 8.8. As will be understood by the skilled person, if the aromatic compound only has a single exchangeable hydrogen, this is the exchangeable hydrogen which is shown in formula (I), (II) or (III). For the avoidance of doubt and in accordance with the common general knowledge of the skilled person, the hydrogen on an amide nitrogen is not considered to be an exchangeable hydrogen.

It is preferred that X represents 1 or 2 substituents.

The expression "Y and Z together represent at most 3 substituents" should be interpreted to mean that the naphthalene core shown in formula (II) and (III) has a total of at most 4 substituents, one being the hydroxide shown in formula (II) and (III) and at most three other substituents located anywhere on the two rings forming the naphthalene core. Thus, Y may represent 1, 2 or 3 substituents and Z may represent 1, 2 or 3 substituents with the proviso that the sum of the amount of substituents represented by Y and Z is at most 3. It is preferred that Y and Z together represent 1 or 2 substituents. Typically Y and Z together represent one substituent, which means that either X does not represent any substituents or Y does not represent any substituents.

In preferred embodiments of the invention, the aromatic compound is selected from those compounds according to formula (I), (II) or (III) which have a pKa value of less than 9.0, preferably less than 8.8, and wherein

X, Y and Z each represent 1 to 3 substituents independently selected from the group consisting of $-R^1$, -F, -Cl, -Br, -I, -OH, $-OR^2$, $-R^3$-OH, $-NO_2$, -CN, $-SO_3H$, $-SO_3R^2$, - $SO_2CF_3$, $-N^+(R^2)_3$, -COH, $-COR^4$, $-COR^2$, $-CO_2H$, $-CO_2R^2$, $-CONH_2$, $-(CONH)R^2$, - $(CON)R^2_2$, $-(CONR^2)$-OH, -(CONH)-OH, $-N{=}CR^{2'}R^{2'}$, $-N{=}CR^{2''}$, $-CR^4_3$, -N=O, $-R^5-(C_6H_4OH)$;

Y and Z together represent at most 3 substituents;

each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_4$ alkyl;

each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N{=}CR^{2''}$ is a cycloalkyl;

each occurrence of $R^4$ is individually selected from the group consisting of -F, -Cl, and -Br, preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals.

In preferred embodiments of the invention, the aromatic compound is selected from those compounds according to formula (I), (II) or (III) which have a pKa value of less than 9.0, preferably less than 8.8, and wherein

X, Y and Z each represent 1 to 3 substituents independently selected from the group consisting of $-R^1$, -F, -Cl, -Br, -I, -OH, $-OR^2$, $-R^3$-OH, $-NO_2$, -CN, $-SO_3H$, $-SO_3R^2$, - $SO_2CF_3$, $-N^+(R^2)_3$, -COH, $-COR^4$, $-COR^2$, $-CO_2H$, $-CO_2R^2$, $-CONH_2$, $-(CONH)R^2$, - $(CON)R^2_2$, $-(CONR^2)$-OH, -(CONH)-OH, $-N=CR^{2'}R^{2'}$, $-N=CR^{2''}$;

Y and Z together represent at most 3 substituents;

each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_4$ alkyl;

each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl.

In preferred embodiments of the invention, the aromatic compound is selected from those compounds according to formula (I), (II) or (III) which have a pKa value of less than 9.0, preferably less than 8.8, and wherein

X, Y and Z each represent 1 to 3 substituents independently selected from the group consisting of -F, -Cl, -Br, -I, $-NO_2$, -CN, $-SO_3H$, $-SO_3R^2$, $-SO_2CF_3$, $-N^+(R^2)_3$, -COH, - $COR^4$, $-COR^2$, $-CO_2H$, $-CO_2R^2$, $-CONH_2$, $-(CONH)R^2$, $-(CON)R^2_2$, $-(CONR^2)$-OH, - (CONH)-OH, $-N=CR^{2'}R^{2'}$, $-N=CR^{2''}$;

Y and Z together represent at most 3 substituents;

each occurrence of $R^2$ is individually selected from the group consisting of $C_1$-$C_4$ alkyl;

each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl.

In preferred embodiments of the invention, the aromatic compound is selected from those compounds according to formula (I), (II) or (III) which have a pKa value of less than 9.0, preferably less than 8.8, and wherein

X, Y and Z each represent 1 to 3 substituents independently selected from the group consisting of -F, -Cl, -Br, -I, $-NO_2$, -CN, $-SO_3H$, $-SO_3R^2$, $-SO_2CF_3$, -COH, $-COR^2$, - $CO_2H$, $-CO_2R^2$, $-CONH_2$, $-(CONR^2)$-OH, -(CONH)-OH;

Y and Z together represent at most 3 substituents;

each occurrence of $R^2$ is individually selected from the group consisting of $C_1$-$C_4$ alkyl.

In preferred embodiments of the invention, the aromatic compound is selected from those compounds according to formula (I), (II) or (III) which have a pKa value of less than 9.0, preferably less than 8.8, and wherein

X, Y and Z each represent 1 to 3 substituents independently selected from the group consisting of -F, -Cl, -Br, -I, $-NO_2$, -CN, -COH, $-CO_2H$, $-CONH_2$,-(CONH)-OH;

Y and Z together represent at most 3 substituents.

In preferred embodiments of the invention, the aromatic compound is selected from those compounds according to formula (I) which have a pKa value of less than 9.0, preferably less than 8.8, and wherein

X represents 1 substituent selected from the group consisting $-R^5-(C_6H_4OH)$;

$R^5$ is selected from the group consisting of $-SO_2-$, -S-, bivalent $C_1$-$C_8$ alkyl radicals, more preferably $R^5$ is selected from the group consisting of $-SO_2-$, -S-, bivalent $C_1$-$C_4$ alkyl radicals.

In preferred embodiments of the invention, the aromatic compound is selected from those compounds according to formula (I) which have a pKa value of less than 9.0, preferably less than 8.8, and wherein

X represents 1 or 2 substituents independently selected from the group consisting of - $R^1$, -F, -Cl, -Br, -I, -OH, $-OR^2$, $-R^3-OH$, $-NO_2$, -CN, $-SO_3H$, $-SO_3R^2$, $-SO_2CF_3$, $-N^+(R^2)_3$, - COH, $-COR^4$, $-COR^2$, $-CO_2H$, $-CO_2R^2$, $-CONH_2$, $-(CONH)R^2$, $-(CON)R^2_2$, $-(CONR^2)-OH$, -(CONH)-OH, $-N=CR^{2'}R^{2'}$, $-N=CR^{2''}$, $-CR^4_3$, -N=O, $-R^5-(C_6H_4OH)$;

each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_4$ alkyl;

each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl;

each occurrence of $R^4$ is individually selected from the group consisting of -F, -Cl, and -Br, preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals.

In preferred embodiments of the invention, the aromatic compound is selected from those compounds according to formula (I) which have a pKa value of less than 9.0, preferably less than 8.8, and wherein

X represents 1 or 2 substituents independently selected from the group consisting of - $R^1$, -F, -Cl, -Br, -I, -OH, $-OR^2$, $-R^3-OH$, $-NO_2$, -CN, $-SO_3H$, $-SO_3R^2$, $-SO_2CF_3$, $-N^+(R^2)_3$, - COH, $-COR^4$, $-COR^2$, $-CO_2H$, $-CO_2R^2$, $-CONH_2$, $-(CONH)R^2$, $-(CON)R^2_2$, $-(CONR^2)-OH$, -(CONH)-OH, $-N=CR^{2'}R^{2'}$, $-N=CR^{2''}$;

each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_4$ alkyl;

each occurrence of $R^2$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl.

In preferred embodiments of the invention, the aromatic compound is selected from those compounds according to formula (I) which have a pKa value of less than 9.0, preferably less than 8.8, and wherein

X represents 1 or 2 substituents independently selected from the group consisting of - F, -Cl, -Br, -I, $-NO_2$, -CN, $-SO_3H$, $-SO_3R^2$, $-SO_2CF_3$, $-N^+(R^2)_3$, -COH, $-COR^4$, $-COR^2$, - $CO_2H$, $-CO_2R^2$, $-CONH_2$, $-(CONH)R^2$, $-(CON)R^2_2$, $-(CONR^2)-OH$, -(CONH)-OH, - $N=CR^{2'}R^{2'}$, $-N=CR^{2''}$;

each occurrence of $R^2$ is individually selected from the group consisting of $C_1$-$C_4$ alkyl;

each occurrence of $R^2$ is individually selected from the group consisting of hydrogen, $C_1$-$C_4$ alkyl;

each occurrence of $R^{2''}$ is individually selected from bivalent $C_2$-$C_8$ alkyl radicals such that -N=$CR^{2''}$ is a cycloalkyl.

In preferred embodiments of the invention, the aromatic compound is selected from those compounds according to formula (I) which have a pKa value of less than 9.0, preferably less than 8.8, and wherein

X represents 1 or 2 substituents independently selected from the group consisting of - F, -Cl, -Br, -I, $-NO_2$, -CN, $-SO_3H$, $-SO_3R^2$, $-SO_2CF_3$, -COH, $-COR^2$, $-CO_2H$, $-CO_2R^2$, - $CONH_2$, -($CONR^2$)-OH, -(CONH)-OH;
each occurrence of $R^2$ is individually selected from the group consisting of $C_1$-$C_4$ alkyl.

In preferred embodiments of the invention, the aromatic compound is selected from those compounds according to formula (I) which have a pKa value of less than 9.0, preferably less than 8.8, and wherein
X represents 1 or 2 substituents independently selected from the group consisting of - F, -Cl, -Br, -I, $-NO_2$, -CN, -COH, $-CO_2H$, $-CONH_2$,-(CONH)-OH.

In highly preferred embodiments the aromatic compound is selected from the following compounds (1)-(15):

| Compound | Name | pKa |
|---|---|---|
| (1) | 4-cyanophenol | 7.97 |
| (2) | 3-cyanophenol | 8.61 |
| (3) | 2-fluorophenol | 8.73 |
| (4) | 2-nitrophenol | 7.17 |
| (5) | 4-nitrophenol | 7.14 |
| (6) | 2-hydroxybenzaldehyde | 6.79 |
| (7) | 3-hydroxybenzaldehyde | 8.00 |
| (8) | 4-hydroxybenzaldehyde | 6.79 |
| (9) | 4-hydroxyacetophenone | 8.05 |
| (10) | Ethyl 4-hydroxybenzoate | 8.50 |
| (11) | Methyl 4-hydroxybenzoate (also known as methylparaben) | 8.5 |
| (12) | Benzhydroxamic acid | 8.88 |
| (13) | N,2-Dihydroxybenzamide (also known as salicylhydroxamic Acid) | 7.32 |
| (14) | Methyl 4-hydroxybenzoate | 8.50 |
| (15) | Bis(4-hydroxyphenyl) Sulfone (also known as Sulfonylbisphenol) | 8.0 |

For completeness the above table also lists the pKa values of the compounds (1)-(15), it can be seen that the pKa is less than 9.0.

In preferred embodiments, for reasons of solubility and resin compatibility it is preferred that the aromatic compound has a molecular weight of less than 500 g/mol, preferably less than 400 g/mol, preferably less than 200 g/mol.

In highly preferred embodiments of the invention, the aromatic compound exhibits a solubility at 25 °C of at least 1 g/l, preferably at least 5 g/l, most preferably at least 10 g/l in a base fluid consisting of 50 vol% monoethylene glycol in water.

In preferred embodiments of the invention, the concentration of the aromatic compound is least 0.05 wt.%, by total weight of the heat-transfer fluid, preferably at least 0.1 wt.%, more preferably at least 0.2 wt.%, more preferably at least 0.25 wt.%, more preferably at least 0.4 wt.%. The aromatic compound is typically comprised in the heat-transfer fluid at a concentration of less than 10 wt.%, preferably less than 6 wt.%, more preferably less than 4 wt.%, most preferably less than 3 wt.%, by total weight of the heat-transfer fluid. In embodiments of the invention, the aromatic compound is comprised in the heat-transfer fluid at a concentration within the range of 0.05-10 wt.%, preferably within the range of 0.1-6 wt.%, more preferably within the range of 0.2-4 wt.%, most preferably within the range of 0.25-2 wt.%.

*The base fluid*

In accordance with the invention the base fluid comprised in the heat-transfer fluid consists of water, or an alcohol or mixtures thereof. In preferred embodiments of the invention the alcohol is selected from the group consisting of monoethylene glycol, diethylene glycol, triethylene glycol, tetraethylene glycol, pentaethylene glycol, hexaethylene

glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, preferably selected from the group consisting of monoethylene glycol, monopropylene glycol, 1,3-propanediol, glycerol and mixtures thereof.

In preferred embodiments of the invention, the base fluid comprises an alcohol, preferably an alcohol as described herein, and the weight ratio of the aromatic compound to the alcohol (by total weight of the heat-transfer fluid) is between 1:750 to 1:2, preferably between 1:500 to 1:10, preferably between 1:400 to 1:20 and most preferably between 1:300 to 1:30.

As used herein, "monoethylene glycol" should be interpreted to mean "ethane-1,2-diol", and is interchangeably referred to as "MEG".

As used herein, "monopropylene glycol" should be interpreted to mean "propane-1,2-diol", and is interchangeably referred to as "MPG".

As used herein, the term "glycerol" means "propane-1,2,3-triol" and is synonymous with glycerin. In preferred embodiments of the invention the base fluid consists of water, monoethylene glycol, monopropylene glycol, 1,3-propanediol, glycerol or mixtures thereof.

In preferred embodiments of the invention the base fluid consists of water and an alcohol, wherein the alcohol is present in an amount of 10-99.5 wt.% (by weight of the base fluid), preferably 10-80 wt.%, more preferably 30-70 wt.%. In particular embodiments the alcohol is present in an amount in the range of 33-60 wt.% (by weight of the base fluid).

In some embodiments of the invention, the base fluid consists only of water, that is, 100% of the base fluid is water.

In embodiments of the invention, the base fluid comprises more than 50 wt.% water (by weight of the base fluid), preferably more than 70 wt.%, more preferably more than 85 wt.%.

In embodiments of the invention, the base fluid comprises more than 50 wt.% monoethylene glycol (by weight of the base fluid), preferably more than 70 wt.%, more preferably more than 85 wt.%, most preferably more than 95 wt.% monoethylene glycol.

In embodiments of the invention, the base fluid comprises more than 50 wt.% monopropylene glycol (by weight of the base fluid), preferably more than 70 wt.%, more preferably more than 85 wt.%, most preferably more than 95 wt.% monopropylene glycol.

In embodiments of the invention, the base fluid comprises more than 50 wt.% 1,3-propane diol (by weight of the base fluid), preferably more than 70 wt.%, more preferably more than 85 wt.%, most preferably more than 95 wt.% 1,3-propane diol.

In embodiments of the invention, the base fluid comprises more than 50 wt.% glycerol (by weight of the base fluid), preferably more than 70 wt.%, more preferably more than 85 wt.%, most preferably more than 95 wt.% glycerol.

In preferred embodiments of the invention, the heat-transfer fluid comprises more than 78 wt.% (by total weight of the heat-transfer fluid) of base fluid, more preferably more than 85 wt.%, even more preferably more than 90 wt.%, still more preferably more than 95 wt.% or more than 96.5 wt.% of base fluid.

As will be understood by the person skilled in the art, the base fluid is normally added to the heat-transfer fluid *'quantum satis'*. In embodiments of the invention, the heat-transfer fluid comprises less than 99.9 wt.% base fluid (by total weight of the heat-transfer fluid), such as less than 99.8 wt.%, less than 99.5 wt.% or less than 99 wt.%, less than 98 wt.% of base fluid.

In some embodiments of the invention, the base fluid is provided wherein water and the alcohol are present in a weight ratio of 95:5 to 5:95 by total weight of the heat-transfer fluid. In other embodiments, the base fluid is provided wherein water and the alcohol are present in a weight ratio of 95:5 to 5:95 by total weight of the base fluid.

*Corrosion Inhibitor*

Cooling systems are typically configured for thermally contacting the heat-transfer fluid with metallic components which are prone to corrosion. Illustrative metals include ferrous and non-ferrous alloys such as stainless steel, aluminium, brass, braze alloy and the like. The present inventors found that the ion-exchange resins (which are employed in cooling systems of electrical systems in order to maintain a low conductivity of the coolant) are prone to removing corrosion inhibitors, even uncharged corrosion inhibitors. The present invention protects the azole-type corrosion inhibitors which may be comprised in a heat-transfer fluid from being absorbed by the ion-exchange resin and thus enables the heat-transfer fluid to maintain the benefits obtained with the use of corrosion inhibitors.

In accordance with the invention, the heat-transfer fluid comprises a corrosion inhibitor selected from the group consisting of triazoles, thiazoles, triazines and combinations thereof.

In highly preferred embodiments of the invention, the corrosion inhibitor is selected from 1,2,3-triazoles, 1,2,4-triazoles, and combinations thereof.

In preferred embodiments of the invention, the corrosion inhibitor is selected from 1,2,4-triazole, 4H-1,2,4-triazole, 4-amino-1,2,4-triazole, 3-amino-1,2,4-triazole, 1,2,4-triazole-3-thiol, 3-amino-1,2,4-triazole-5-thiol, 3,5-diamino-1,2,4-triazole, 1H-1,2,3-triazole, benzotriazole, 2-mercaptobenzothiazole, tolyltriazole, 2-[2-hydroxyethyl-[(4-methylbenzotriazol-1-yl)methyl]amino]ethanol, 2-[2-hydroxyethyl-[(benzotriazolyl)methyl]amino]ethanol, (2-Benzothiazolylthio)acetic acid, 2,2'-[[(Methyl-1H-benzotriazol-1-yl)methyl]imino]bisethanol, N,N-bis(2-ethylhexyl)-methyl-1H-Benzotriazole-1-methanamine, and combinations thereof, more preferably selected from benzotriazole, tolyltriazole, 2-mercaptobenzothiazole, and combinations thereof. In highly preferred embodiments the corrosion inhibitor is selected from benzotriazole, tolyltriazole, and combinations thereof.

In some embodiments of the invention, the corrosion inhibitor is a thiazole selected from 4,4'-(4(ethane-1,2-diylbis(oxy))bis(4-phenylene)dithiazol-2-amine, 2-(acetyl-ethoxycarbonyl-methyleno)-3-phenyl-4-(phenylhydrazono)-1,3-thiazolidin-5-one, 2-amino-4-(4-chlorophenyl)-thiazole, 2-Methoxy-1,3-thiazole, 4-(4-methylphenyl)-2-thiazolamine, 2-amino-4-methyl-thiazole, 2-salicylidene amino-4-phenylthiazole, 4-[1-aza-2-(phenyl)vinyl]-3-phenyl-2-thioxo(1,3-thiazoline-5-yl), 4-(4-Methylphenyl)- 2-thiazolamine, 2-amino-4-methyl-thiazole, 2-amino-thiazole, 2,2'-dithiobis(benzothioazole), and combinations thereof.

In some embodiments of the invention, the corrosion inhibitor is a triazine selected from 1,2,3-triazine,1,2,4-triazine, 1,3,5-triazine, 6-methyl-5-[m-nitrostyryl]-3-mercapto-1,2,4-triazine, 2,4,6-tris (2-pyridyl)-1,3,5-triazine and combinations thereof.

In preferred embodiments of the invention, the corrosion inhibitor is selected from compounds according to general formula (IV-a), (IV-b) and/or (IV-c):

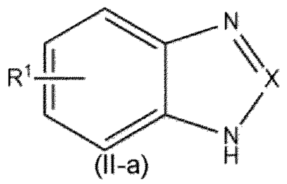
(II-a)

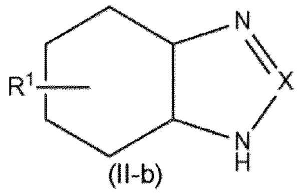
(II-b)

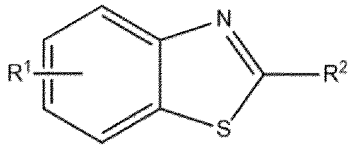
(II-c)

wherein $R^1$ represents one, two or three substituents on the six-membered ring, each substituent being independently selected from $C_1$-$C_{11}$ alkyl, amine, methoxy, ethoxy, Cl or Br;

wherein X is nitrogen; and

wherein $R^2$ is selected from hydrogen, a mercapto group (-SH), or a $C_1$-$C_{11}$ alkyl, preferably methyl or ethyl;

preferably

wherein $R^1$ represents one, two or three substituents on the six-membered ring, each substituent being independently selected from $C_1$-$C_6$ alkyl, amine, methoxy, ethoxy, Cl or Br;

wherein X is selected from nitrogen or a C-H group; and

wherein $R^2$ is selected from hydrogen, a mercapto group (-SH), or a $C_1$-$C_6$ alkyl, preferably methyl or ethyl.

In preferred embodiments of the invention, the corrosion inhibitor is present in the heat-transfer fluid in an amount of at least 0.005 wt.% (by total weight of the heat-transfer fluid), preferably at least 0.01 wt.%, more preferably at least 0.05 wt.%. The corrosion inhibitor is typically present in an amount within the range of 0.005-5 wt.% (by total weight of the heat-transfer fluid), preferably 0.01-3 wt.%, more preferably 0.05-1 wt.%. The weight ratio of the aromatic compound to the corrosion inhibitor, by total weight of the heat-transfer fluid, is at least 1:2, preferably at least 1:1, more preferably at least 2:1. The ratio (w/w) of the aromatic compound to the corrosion inhibitor in the heat-transfer fluid is preferably less than 50:1, more preferably less than 30:1.

*Further additives*

As will be understood by the skilled person, based on teachings presented herein, the heat-transfer fluids in accordance with the invention may comprise one or more further additives, as is conventional in the art. It is within the routine capabilities of one of ordinary skill in the art to determine how much of a certain additive can be added such that the electrical conductivity of the resulting heat-transfer fluid is in accordance with the invention. As will be appreciated by those skilled in the art, non-ionic further additives are preferred. The heat-transfer fluid described herein comprises well-defined

amounts of water, the base fluid alcohol, the aromatic compound, and the azole-type corrosion inhibitor. Accordingly, the one or more further additives are different from water, the base fluid alcohol, the aromatic compound, and the azole-type corrosion inhibitor as described herein earlier.

In certain embodiments of the invention the heat-transfer fluid provided herein, comprises one or more further additives, preferably one or more further additives selected from the group consisting of corrosion inhibitors, liquid dielectrics, antioxidants, anti-wear agents, detergents and antifoam agents. In preferred embodiments, the heat-transfer fluid of further comprises one or more of said further additives in an amount within the range of 0.001-10 wt.% (by total weight of the heat-transfer fluid), preferably 0.01-5 wt.%, more preferably 0.02-3 wt.%.

The optional further corrosion inhibitor is different from the azole-type corrosion inhibitor and is preferably a non-ionic corrosion inhibitor. Examples of suitable non-ionic corrosion inhibitors are non-ionic polymers, silicate esters (such as $Si(OR)_4$, wherein R is a $C_1$ to $C_4$ alkyl group), organic silicates (such as $Si(R^1)_n(OR^2)_{4-n}$ wherein $R^1$ and $R^2$ each independently are a $C_1$ to $C_6$ alkyl or phenyl, and wherein n is 0, 1, 2 or 3), trimethylsilyl containing molecules (such as N,O-bis(trimethylsilyl)acetamide, N-trimethylsilylacetamide), alcohols containing an alkene or alkyne group (such as 3-butene-1-ol, 4-pentene-1-ol, 2,5-dimethyl-3-hexyne-2,5-diol) and combinations thereof, wherein the non-ionic polymers are preferably selected from the group consisting of polyvinylpyrrolidones, polyvinylalcohols, polyalkyleneoxides, polysiloxanes, $C_1$-$C_{18}$ alkyl or alkenyl ethers of polyalkyleneoxides, $C_1$-$C_{18}$ alkyl or alkenyl esters of polyalkyleneoxides, alkoxylated $C_1$-$C_{18}$ alkyl or alkenyl amines, polyvinylacetates, copolymers thereof and combinations thereof. In preferred embodiments, the heat-transfer fluid of the invention further comprises one or more of said non-ionic corrosion inhibitors in an amount within the range of 0.001-10 wt.% (by total weight of the heat-transfer fluid), preferably 0.01-5 wt.%, more preferably 0.02-3 wt.%.

In embodiments of the invention, the heat-transfer fluid comprises a defoaming agent. Preferably, the defoaming agent is selected from the group consisting of a polyolefin, or a silicon polymer (such as a 3D silicon polymer) or a silicon oil. In embodiments of the invention, a heat-transfer fluid as defined herein is provided, wherein the heat-transfer fluid further comprises the defoaming agent in an amount of more than 0.001 wt.% (by total weight of the heat-transfer fluid), preferably more than 0.005 wt.%, preferably more than 0.01 wt.% and/or less than 10 wt.%, preferably less than 5 wt.%, preferably less than 3 wt.%.

In embodiments of the invention, the heat-transfer fluid further comprises an antioxidant. Preferably, the antioxidant is selected from the group consisting of

- aromatic amines (such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines);
- sulphur containing compounds (such as dithiophosphates, dithiophosphites, sulphides, tin-dialkyldithiophosphates and zinc diaryldithiophosphates);
- aromatic alcohols selected from phenols, pyrogallols, gallic acid, gallate esters and combinations thereof, with the proviso that the phenol is not an aromatic compound according to formula (I) having a pKa of less than 9.0 (such as 2-aminophenol, 4-aminophenol, 2-Amino-4-methylphenol, 2,6 di-t-butyl methylphenol, 4,4'-methylene-bis(2,6-di-t-butylphenol), and 4-amino-3-methylphenol, gallic acid, $C_1$-$C_{12}$ alkyl esters of gallate);
- reducing sugars (such as xylitol);
- dioxo-aromatic compound selected from benzoquinones, napthoquinones, hydroquinones and catechols (such as 1,4-benzoquinone, 1,2-benzoquinone, 1,2-napthoquinone, 1,4-napthoquinone, 1,4-dihydroxybenzene and 1,2-dihydroxybenzene, optionally having a 0, 1, or 2 substituents independently selected from amino, $C_1$-$C_6$ alkyl, sulphonic acid); and
- sterically hindered alcohols (such as butyl hydroxy toluene).

In embodiments of the invention, a heat-transfer fluid as defined herein is provided, wherein the heat-transfer fluid further comprises the antioxidant in an amount more than 0.001 wt.% (by total weight of the heat-transfer fluid), preferably more than 0.005 wt.%, preferably more than 0.01 wt.% and/or less than 10 wt.%, preferably less than 5 wt.%, preferably less than 3 wt.%.

In embodiments of the invention, the heat-transfer fluid further comprises a liquid dielectric. Preferred liquid dielectrics are minerals oils, silicon oils and mixtures thereof. In certain embodiments of the invention the heat-transfer fluid provided herein comprises more than 0.0001 wt.% (by total weight of the heat-transfer fluid) of the liquid dielectric preferably more than 0.001 wt.%, preferably more than 0.01 wt.% and/or less than 10 wt.%, preferably less than 5 wt.%,

preferably less than 3 wt.%.

In embodiments of the invention, the heat-transfer fluid further comprises an anionic surfactants, such as anionic surfactants which are the salt of a compound represented by R-X; wherein X represents a sulfate group, a phosphate group, a sulfonate group, or a carboxylate group, preferably a sulfate group; and wherein R is selected from:

- branched or straight chain $C_5$-$C_{24}$ alkyl groups;
- branched or straight chain mono-unsaturated $C_5$-$C_{24}$ alkenyl groups;
- branched or straight chain poly-unsaturated $C_5$-$C_{24}$ alkenyl groups;
- alkylbenzene groups comprising a $C_8$-$C_{15}$ alkyl;
- alkenylbenzene groups comprising a $C_8$-$C_{15}$ alkenyl;
- alkylnaphthalene groups comprising a $C_3$-$C_{15}$ alkyl;
- alkenylnaphthalene groups comprising a $C_3$-$C_{15}$ alkenyl;
- alkylphenol groups comprising a $C_8$-$C_{15}$ alkyl; and
- alkenylphenol groups comprising a $C_8$-$C_{15}$ alkenyl.

In embodiments of the invention, the heat-transfer fluid comprises said anionic surfactant in an amount of more than 0.001 wt.% (by total weight of the heat-transfer fluid), preferably more than 0.005 wt.%, preferably more than 0.01 wt.% and/or less than 10 wt.%, preferably less than 5 wt.%, preferably less than 3 wt.%.

In embodiments of the invention, the heat-transfer fluid as defined herein is provided, wherein the heat-transfer fluid further comprises a corrosion inhibitor selected from the group consisting of aromatic carboxylates, aliphatic monocarboxylates, aliphatic dicarboxylates, aliphatic tricarboxylates, molybdates, and phosphates. As is understood by the skilled person, the carboxylates referred to herein are typically provided in the form of a free acid which is neutralized in-situ.

In embodiments of the invention, the heat-transfer fluid further comprises an aliphatic monocarboxylate, preferably an aliphatic monocarboxylate selected from the group consisting of $C_4$-$C_{12}$ aliphatic monocarboxylates in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer fluid further comprises an aliphatic dicarboxylate, preferably an aliphatic dicarboxylate selected from the group consisting of $C_6$-$C_{16}$ aliphatic dicarboxylates, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer fluid further comprises an aliphatic tricarboxylate, preferably an aliphatic tricarboxylate selected from the group consisting of $C_7$-$C_{18}$ aliphatic tricarboxylates, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

**In** embodiments of the invention, the heat-transfer fluid further comprises an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4-dicarboxylate and combinations thereof, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer fluid further comprises a corrosion inhibitor which is a molybdate, preferably an inorganic molybdate in an amount of more than 1 ppm (by weight) molybdate, preferably more than 10 ppm, preferably more than 100 ppm molybdate and/or less than 10000 ppm, preferably less than 1000 ppm, preferably less than 500 ppm. If the molybdate is employed in the form of a salt, the amount of molybdate as used in this document refers to the amount of molybdate anion (i.e. exclusive of the weight of the cationic counterion).

In embodiments of the invention, the heat-transfer fluid further comprises a corrosion inhibitor which is a

phosphate, preferably an inorganic phosphate in an amount of more than 10 ppm (by weight) phosphate, preferably more than 250 ppm, preferably more than 1000 ppm phosphate and/or less than 10000 ppm, preferably less than 5000 ppm, preferably less than 2500 ppm. If the phosphate is employed in the form of a salt, the amount of phosphate as used herein refers to the amount of phosphate anion (i.e. exclusive of the weight of the cationic counterion).

In embodiments of the invention, the heat-transfer fluid further comprises a corrosion inhibitor which is a silicate in an amount more than 1 ppm Si (by weight), preferably more than 10 ppm Si, most preferably more than 100 ppm Si and/or less than 10000 ppm, preferably less than 1000 ppm, preferably less than 500 ppm. Said silicate corrosion inhibitor is preferably selected from the group consisting of inorganic silicates (such as sodium metasilicate), organic silicates (such as $Si(R^1)_n(OR^2)_{4-n}$ wherein $R^1$ and $R^2$ each independently are a $C_1$ to $C_6$ alkyl or phenyl, and wherein n is 0, 1, 2 or 3) or Silica ($SiO_2$) nanoparticles (such as silica nanoparticles having a volume median particle size (Dv50) within the range of 10-200 nm).

In embodiments of the invention, the heat-transfer fluid further comprises a nitrate, preferably an inorganic nitrate in an amount of more than 1 ppm (by total weight of the heat transfer fluid) nitrate, preferably more than 10 ppm, preferably more than 100 ppm nitrate and/or less than 10000 ppm, preferably less than 1000 ppm, preferably less than 500 ppm. If the nitrate is employed in the form of a salt, the amount of nitrate as used in this document refers to the amount of nitrate anion (i.e. exclusive of the weight of the cationic counterion).

In embodiments of the invention, the heat-transfer fluid further comprises a nitrite, preferably an inorganic nitrite in an amount of more than 1 ppm (by total weight of the heat transfer fluid) nitrite, preferably more than 10 ppm, preferably more than 100 ppm nitrite and/or less than 10000 ppm, preferably less than 1000 ppm, preferably less than 500 ppm. If the nitrite is employed in the form of a salt, the amount of nitrite as used in this document refers to the amount of nitrite anion (i.e exclusive of the weight of the cationic counterion).

**In** embodiments of the invention, the heat-transfer fluid further comprises a phosphonate, preferably an inorganic phosphonate in an amount of more than 10 ppm (by total weight of the heat transfer fluid) phosphonate, preferably more than 250 ppm, preferably more than 1000 ppm phosphonate and/or less than 10000 ppm, preferably less than 5000 ppm, preferably less than 2500 ppm. If the phosphonate is employed in the form of a salt, the amount of phosphonate as used in this document refers to the amount of phosphonate anion (i.e. exclusive of the weight of the cationic counterion).

The present inventors have found that the inclusion of certain further additives in the heat-transfer fluids of the present invention may particularly improve one or more of the composition's properties when used as a heat-transfer fluid, in particular when considering corrosion inhibition and the capacity to maintain a low electrical conductivity upon ageing in the presence of metals, at increased temperatures, while maintaining the same performance. Such particularly preferred additives, referred to herein as "enhancing additives" include non-ionic polymers, amines, aromatic alcohols, dioxo-aromatic compound and non-ionic surfactants. These are described in more detail in the following paragraphs.

In preferred embodiments of the invention the heat-transfer fluid further comprises a non-ionic polymer selected from the group consisting of polyvinylpyrrolidones, polyvinylalcohols, polyalkyleneoxides, polysiloxanes, $C_1$-$C_{18}$ alkyl or alkenyl ethers of polyalkyleneoxides, $C_1$-$C_{18}$ alkyl or alkenyl esters of polyalkyleneoxides, alkoxylated $C_1$-$C_{18}$ alkyl or alkenyl amines, polyvinylacetates, copolymers thereof and combinations thereof, preferably a non-ionic polymer selected from polyvinylpyrrolidones. The non-ionic polymer preferably has a weight average molecular weight $M_w$ in the range of 100 to 5,000,000 g/mol, preferably 500 to 2,500,000 g/mol. The polyalkelyne oxides are preferably selected from polyethylene oxides, polypropylene oxides, polybutyleneoxides, and copolymers thereof. The polyvinylpyrrolidone may be selected from polyvinylpyrrolidone homopolymer and polyvinylpyrrolidone copolymers, preferably polyvinylpyrrolidone homopolymer. Examples of suitable polyvinylpyrrolidone copolymers include polymers of *N*-vinylpyrrolidone in combination with at least one other monomer selected from styrene, vinyl acetate, ethylene, propylene, tetrafluoroethylene, methyl methacrylate, vinyl chloride and ethylene oxide. In such embodiments the percentage of *N*-vinylpyrrolidone monomers is at least 10%, more preferably at least 25%, such as at least 50%, at least 60%, at least 70%, at least 80%, at least 90%, or at least 95%, based on the total number of monomers in the polyvinylpyrrolidone copolymer. Preferred polyvinylpyrrolidone copolymers that can be applied in the heat-transfer fluid include copolymers of *N*-vinylpyrrolidone and vinyl acetate, wherein the percentage of *N*-vinylpyrrolidone monomers is at least 25%, based on the total number of monomers in the polyvinylpyrrolidone copolymer, hydrolysed forms of copolymers of *N*-vinylpyrrolidone and vinyl acetate, wherein the percentage of *N*-vinylpyrrolidone monomers is at least 10%, based on the total number of monomers in the polyvinylpyrrolidone copolymer and copolymers of *N*-vinylpyrrolidone and N-vinylcaprolactam, wherein the percentage of *N*-vinylpyrrolidone monomers is at least 40%, based on the total number of monomers in the polyvinylpyrrolidone copolymer. The polyvinylpyrrolidone, preferably the polyvinylpyrrolidone homopolymer, preferably has a weight average molecular weight $M_w$ in the range of 100 to 5,000,000 g/mol, preferably 500 to 2,500,000 g/mol. As appreciated by the skilled person, the weight average molecular is the weight fraction of molecules in a polymer sample and provides the average of the molecular masses of the individual macromolecules in the polymer sample. The weight average molecular weight as defined herein is determined using the following equation: $M_w = (\sum N_i M_i^2)/(\sum N_i M_i)$. The skilled person knows the different techniques to determine the weight average molecular weight of polymers of varying chain lengths.

The weight average molecular weight and the corresponding method of measurement are typically indicated on the product data sheet of the considered polymers. In particular embodiments of the invention, the polyvinylpyrrolidone, preferably the polyvinylpyrrolidone homopolymer, has a weight average molecular weight in the range of 3,000 to 2,500,000 g/mol, preferably in the range of 5,000 to 2,250,000 g/mol, more preferably in the range of 7,500 to 2,00,000 g/mol, even more preferably in the range of 8,000 to 1,800,000 g/mol. polyvinylpyrrolidone that may be suitable used as additive can be purchased from commercial supplies such as BASF, Sigma-Aldrich or Nippon Shokubai. Examples of commercially available polyvinylpyrrolidone are Luvitec K17 ($M_W$ = 9,000 g/mol), Luvitec K30 (Mw= 50,000 g/mol), Luvitec K90 (Mw = 1,400,000 g/mol) and PVP K30. In embodiments of the invention, the heat-transfer fluid comprises as a further additive the non-ionic polymer in an amount of more than 0.001 wt.% (by total weight of the heat transfer fluid), preferably more than 0.005 wt.%, preferably more than 0.01 wt.% and/or less than 10 wt.%, preferably less than 5 wt.%, preferably less than 3 wt.%.

In preferred embodiments of the invention the heat-transfer fluid further comprises an amine. The amine is preferably selected from molecules consisting of the atoms C, N, H and optionally O, comprising 1 to 10 C atoms, comprising one or more amine functional groups and optionally comprising one or more hydroxyl or ether functional groups, and preferably wherein the amine is free of other functional groups than the one or more amine functional groups and optionally one or more hydroxyl or ether functional groups. In preferred embodiments the amine is selected from the group consisting of methylamine, dimethylamine, trimethylamine, ethylamine, isopropylamine, tributylamine, triethylamine, 2-dimethylaminoethanol, 2-diethylaminoethanol, monoethanolamine, 2-amino-2-methyl-1-propanol, ethoxylated caprylamine, diisopropylamine, 2-dibutylaminoethanol, 2-dipropylaminoethanol, triethanolamine, tri(isopropanol)amine, ethylenediamine, piperadine, morpholine, pyrrolidine, piperazine, diisopropyl-methylamine, 1,4-diazabicyclo[2.2.2]octane, quinuclidine, ethanolamine, diethanolamine, benzylamine, cyclohexamine, hexylamine, dicyclohexylamine, isobutanolamine, dihydroxyethylamine, 3- methoxypropylamine, p,p-dioctylphenylamine, monooctyldiphenylamine, phenyl-1-naphthylamine, phenyl-2-naphthylamine, alkylphenyl-1-naphthatalamines, alkyl-phenyl-2-naphthal-amines, alkoxylated $C_1$-$C_{22}$ hydrocarbyl amines (in particular ethoxylated caprylamine such as 2-EO-caprylamine) and combinations thereof. In embodiments of the invention, the heat-transfer fluid comprises as a further additive the amine in an amount of more than 0.001 wt.% (by total weight of the heat transfer fluid), preferably more than 0.005 wt.%, preferably more than 0.01 wt.% and/or less than 10 wt.%, preferably less than 5 wt.%, preferably less than 3 wt.%.

In embodiments of the invention the heat-transfer fluid described herein further comprises an aromatic alcohol selected from phenols, pyrogallols, gallic acid, gallate esters and combinations thereof, with the proviso that the phenol is not an aromatic compound according to formula (I) having a pKa of less than 9.0. The phenol is preferably selected from phenol optionally having a 0, 1, 2 or 3 substituents independently selected from amino, $C_1$-$C_6$ alkyl with the proviso that the phenol is not an aromatic compound according to formula (I) having a pKa of less than 9.0. Examples of suitable and preferred phenols include 2-aminophenol, 4-aminophenol, 2-Amino-4-methylphenol, 2,6 di-t-butyl methylphenol, 4,4’-methylene-bis(2,6-di-t-butylphenol), and 4-amino-3-methylphenol. Examples of suitable and preferred gallate esters include $C_1$-$C_{12}$ alkyl esters of gallate. In embodiments of the invention, the heat-transfer fluid comprises as a further additive the aromatic alcohol in an amount of more than 0.001 wt.% (by total weight of the heat transfer fluid), preferably more than 0.005 wt.%, preferably more than 0.01 wt.% and/or less than 10 wt.%, preferably less than 5 wt.%, preferably less than 3 wt.%.

**In** embodiments of the invention the heat-transfer fluid further comprises a dioxo-aromatic compound selected from benzoquinones, napthoquinones, hydroquinones and catechols. The dioxo-aromatic compound is preferably selected from 1,4-benzoquinone, 1,2-benzoquinone, 1,2-napthoquinone, 1,4-napthoquinone, 1,4-dihydroxybenzene and 1,2-dihydroxybenzene, optionally having a 0, 1, or 2 substituents independently selected from amino, $C_1$-$C_6$ alkyl, sulphonic acid. In embodiments of the invention, the heat-transfer fluid comprises as a further additive the dioxo-aromatic compound in an amount of more than 0.001 wt.% (by total weight of the heat transfer fluid), preferably more than 0.005 wt.%, preferably more than 0.01 wt.% and/or less than 10 wt.%, preferably less than 5 wt.%, preferably less than 3 wt.%.

In embodiments of the invention, the heat-transfer fluid further comprises a secondary antioxidant selected from thiols, thioethers, and thioesters, such as those selected from methyl mercaptan, ethyl mercaptan, n-propyl mercaptan, 2-propenethiol, butanethiol, tert-butyl mercaptan, thiophenol, thioacetic acid, dimercaptosuccinic acid, glutathione, cysteine, methyl thionobenzoate, dimethyl sulfide, methyl phenyl sulfide, 4-ethylthio-2-methylpent-2-ene, dimethyl sulfide, diethyl sulfide, diphenyl sulfide, phenyl 4-piperidyl sulfide, and thiodiglycol.

In embodiments of the invention the heat-transfer fluid further comprises a non-ionic surfactant. The non-ionic surfactant is preferably selected from the group consisting of:

- fatty acid esters, such as sorbitan fatty acid esters;
- polyalkylene glycols;
- polyalkylene glycol esters;

- copolymers and block copolymers of ethylene oxide and propylene oxide;
- polyoxyalkylene derivatives of sorbitan fatty acid esters; and
- alkoxylated alcohol ethers.

In embodiments of the invention, the heat-transfer fluid comprises as a further additive the non-ionic surfactant in an amount of more than 0.001 wt.% (by total weight of the heat transfer fluid), preferably more than 0.005 wt.%, preferably more than 0.01 wt.% and/or less than 10 wt.%, preferably less than 5 wt.%, preferably less than 3 wt.%.

In some embodiments of the invention, the heat-transfer fluid comprises a polymeric dye. As will be understood by the person skilled in the art, utilising such large polymeric dyes minimizes interaction with the ion-exchange resin. Commercially available examples of suitable dyes include Liquitint® Red ST or other similar polymeric colorants from Milliken Chemical of Spartanburg, S.C., USA, or colorants (e.g., Liquitint® Blue RE) from Chromatech of Canton, Mich., USA. Other illustrative colorants include the following: Liquitint Red ST, Liquitint Blue RE, Liquitint Red XC, Liquitint Patent Blue, Liquitint Bright yellow, Liquitint Bright orange, Liquitint Royal Blue, Liquitint Blue N-6, Liquitint Bright Blue, Liquitint Supra Blue, Liquitint Blue HP, Liquitint Blue DB, Liquitint Blue II, Liquitint Exp. Yellow 8614-6, Liquitint Yellow BL, Liquitint Yellow II, Liquitint Sunbeam Yellow, Liquitint Supra yellow, Liquitint Green HMC, Liquitint violet, Liquitint Red BL, Liquitint Red RL, Liquitint Cherry Red, Liquitint Red II, Liquitint Teal, Liquitint Yellow LP, Liquitint Violet LS, Liquitint Crimson, Liquitint Aquamarine, Liquitint Green HMC, Liquitint Red HN, Liquitint Red ST, as well as combinations thereof. In one exemplary embodiment, the dye will be at least one of Liquitint Red, Liquitint Yellow, Liquitint Patent Blue or combinations thereof.

In embodiments, the heat-transfer fluid further comprises one or more additives selected from the group consisting of polyolefins, silicon oils, mineral oils, monocarboxylic acids, dicarboxylic acids, tricarboxylic acids, molybdates, nitrates, nitrites, phosphonates and phosphates. In preferred embodiments, the heat-transfer fluid of the invention further comprises one or more of said additives in an amount within the range of 0.001-10 wt.% (by total weight of the heat-transfer fluid), preferably 0.01-5 wt.%, more preferably 0.02-3 wt.%.

*Concentrate*

In an embodiment of the invention, the heat-transfer fluid as described herein is provided in the form of a concentrate.

**In** preferred embodiments, the concentrate is suitable to prepare the heat-transfer fluid described herein by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the heat-transfer fluid solely by addition of water and/or alcohol; preferably solely by addition of water (i.e. no other ingredient needs to be added in order to prepare the heat-transfer fluid described herein from the concentrate).

In preferred embodiments, the concentrate is provided wherein the concentration of the aromatic compound is at least 5 wt.%, by total weight of the concentrate, preferably at least 10 wt.%, more preferably at least 15 wt.% and most preferably at least 20 wt.%.

*Methods of preparation*

In another aspect of the invention there is provided a method to prepare the heat-transfer fluid as defined herein, comprising the steps of:

(i) providing an aromatic compound according to formula (I), (II) or (III) and having a pKa of less than 9.0 as defined herein, and providing a corrosion inhibitor selected from the group consisting of triazoles, thiazoles, triazines and combinations thereof;
(ii) providing a base fluid as defined herein;
(iii) optionally providing further additives as defined herein; and
(iv) combining the aromatic compound and the corrosion inhibitor of step (i), with the base fluid of step (ii) and the optional further additives of step (iii) to obtain the heat-transfer fluid.

In accordance with the invention, the order of addition of the compounds is not particularly limited.

In some embodiments, there is provided a method to prepare the heat-transfer fluid as defined herein, consisting of the following steps:

(i) providing a concentrate as defined herein;

(ii) providing water, alcohol or a mixture thereof;

(iii) combining the concentrate of step (i) with the water, alcohol or a mixture thereof of step (ii) to obtain the heat-transfer fluid.

***Method of exchanging heat***

In some embodiments, the invention provides a method for exchanging heat, the method comprising the steps of:

a. providing a heat-transfer fluid as defined herein;

b. providing a cooling system configured for thermally contacting the heat-transfer fluid with an electrical system, the cooling system comprising an ion-exchange resin;

c. transferring heat from the electrical system to the heat-transfer fluid; and

d. contacting the heat transfer-fluid with the ion-exchange resin.

In preferred embodiments, the volume ratio of the heat-transfer fluid to the ion-exchange resin is at least 1:99 v/v%, preferably at least 5:95 v/v%, more preferably at least 10:90 v/v% and most preferably at least 20:80 v/v%.

The ion-exchange resin preferably comprises a cation-exchange resin. The ion-exchange resin is preferably a mixed resin comprising anion-exchange and cation-exchange functionalities.

The cooling system, heat-transfer fluid and ion-exchange resin are preferably as is been described herein elsewhere. Thus, the embodiments characterising the cooling system (in particular further components thereof), the heat-transfer fluid (in particular the conductivity, the compounds comprised therein, and the concentrations thereof) and ion-exchange resin described herein apply *mutatis mutandis* to the method of the invention.

*The cooling system*

The cooling system referred to herein typically comprises further components such as a heat-exchanger provided for transferring heat away from the heat-transfer fluid (typically provided for exchanging heat with ambient air, such as a radiator), one or more pumps, one or more valves, and conduits for connecting various components of the cooling system. The various components of the cooling system together define a flow path for the heat-transfer fluid.

In highly preferred embodiments, the ion exchange resin is positioned in the flow path of the heat-transfer fluid. In some embodiments, the cooling system of step (b) comprises the ion-exchange resin in a cartridge. In other embodiments, the ion-exchange resin may be immobilized on an inner surface of the cooling system, for instance on a porous support or bed which is fixed to the cooling system of step (b) in a way such that it can contact the heat-transfer fluid of step (a) during use.

In some embodiments of the invention, the cooling system of step (b) comprises a by-pass to which the heat-transfer fluid is directed towards the ion-exchange resin. In preferred embodiments, for every circulation through the coolant system, at least 10 v/v%, preferably at least 15 v/v%, more preferably at least 20 v/v% and most preferably 30 v/v% of the heat-transfer fluid flows through the ion-exchange resin. In some embodiments, such a bypass is always open such that heat-transfer fluid contacts the ion-exchange resin with every circulation through the coolant system. In other embodiments, the by-pass is closed and re-opened periodically such that the heat-transfer contacts the ion-exchange resin periodically, preferably at least once in every five circulations, preferably at least once in every 3 circulations, more preferably at least once in every 2 circulations through the coolant system.

The cooling system is typically designed to prevent contact between the heat-exchange fluid and air, such that *inter alia* decomposition of the base fluid can be avoided. Thus, the flow path for the heat-transfer fluid in the cooling system is preferably essentially isolated from air.

In some embodiments of the invention, the present method further comprises a step comprising passing the heat-transfer fluid through a heat exchanger and transferring heat away from the heat-transfer fluid.

In accordance with the invention the heat-transfer fluid is typically circulated in the cooling system such that steps (c) and (d) are continuously taking place simultaneously. However, in some embodiments the ion-exchange resin may be separated from a part of the cooling circuit with one or more valves such that step (c) can take place continuously without step (d) taking place continuously. Step (d) can then be performed at predetermined intervals, or in response to user action or sensor data, such as sensor data comprising information about the pH and/or the conductivity of the heat-transfer fluid.

In highly preferred embodiments of the invention, the electrical conductivity of the heat-transfer fluid is maintained at less than less than 100 μS/cm, preferably less than 50 μS/cm, more preferably less than 25 μS/cm, more preferably less than 10 μS/cm, most preferably less than 5 μS/cm throughout the method.

*The electrical system*

In preferred embodiments of the invention, the method further comprises a step of generating heat in an electrical system.

The electrical system referred to herein is preferably an electrical system selected from the group consisting of a solar system, a fuel cell, an electrical motor, a generator, a battery, a battery electric vehicle, DC/DC converters, DC/AC converters, a telephone transmission state, power electronics, a radio and television broadcast station, a relay station, an electrical heating or cooling device, and a data center, preferably a fuel cell, battery or power electronics.

*The Ion-Exchange resin and pre-treatment thereof*

Suitable ion-exchange resins in the context of the present invention include anion exchange resins, cation exchange resins, mixed ion exchange resins and combinations thereof. A mixed ion exchange resin as used herein denotes a resin having a combination of anion-exchange and cation-exchange functionalities. This can be provided in the same resin by chemical design, or achieved by simply mixing an anion exchange resin and a cation exchange resin. In some embodiments of the invention the resin comprises a combination of two or more resins, for example placed such that the heat-transfer fluid is first circulated through a first resin and then through a second resin, such as first through an anion-exchange resin followed by a mixed ion exchange resin.

The resin is preferably a polymeric resin. Typically the resins comprise a polymeric backbone which has ion-exchanging sites introduced after polymerisation, such as sulfonate groups, phosphonate groups, phosphinate groups, quaternary ammonium groups, carboxylate groups, etc. The polymeric backbone is preferably selected from polystyrene, polystyrene and styrene copolymers, polyacrylate, aromatic substituted vinyl copolymers, polymethacrylate, phenol-formaldehyde, polyalkylamine, and combinations thereof. In an embodiment of the invention, the polymer backbone is selected from polystyrene and styrene copolymers, polyacrylate, and polymethacrylate. In an embodiment of the invention the polymer backbone is selected from styrene divinylbenzene copolymers. In an embodiment of the invention, the ion-exchanging sites in a cation exchange resin comprise sulphonates, phosphonates and/or carboxylic acids. In an embodiment of the invention, the ion-exchanging sites in an anion-exchange resin comprise quaternary ammonium groups. Examples of suitable quaternary ammonium groups are benzyltrimethylammonium, benzyldimethylethanolammonium, trialkylbenzyl ammonium, trimethylbenzyl ammonium, or dimethyl-2-hydroxyethylbenzyl ammonium and combinations thereof.

Commercially available ion exchange resins suitable for use herein are available from DuPont as Amberlite™, Amberjet™, Duolite™, and Imac™ resins, from Bayer of Leverkusen, Germany as Lewatit™ resin, from Dow Chemical of Midland, Mich. as Dowex™ resin, from Mitsubishi Chemical of Tokyo, Japan as Diaion™ and Relite™ resins, from Purolite of Bala Cynwyd, Pa. as Purolite™ resin, from Sybron of Birmingham, N.J. as Ionac™ resin, from Resintech of West Berlin, N.J., and the like. In one embodiment, a suitable commercially available ion exchange resin will be Dowex ™ MR-3 LC NG Mix mixed bed resin, Dowex™ MR-450 UPW mixed bed resin, Sybron Ionac™ NM-60 mixed bed resin, Amberlite™ MB-150 or AmberLite™ IRN170 H/OH mixed bed resin, while in one exemplary embodiment, a suitable commercially available ion exchange resin will be AmberLite™ IRN170 H/OH. References to tradenames herein should be construed as referring to the product marketed under that tradename on 01 October 2023.

The present inventors have found that resin pretreatments (e.g. by soaking the resin) are not necessary and can actually be avoided employing the aromatic compounds according to formula (I), (II) or (III) and having a pKa of less than 9.0 as described herein. However, in some circumstances a resin pretreatment may still be desirable. Thus, in an embodiment of the invention, the ion-exchange resin of the heat-exchange system is pre-treated by contacting the resin with an aromatic compound according to formula (I), (II) or (III) and having a pKa of less than 9.0 as described herein before the resin is contacted with the heat-transfer fluid of the invention. In preferred embodiments of the invention, the ion-exchange resin is contacted with an aromatic compound according to formula (I), (II) or (III) and having a pKa of less than 9.0 as described herein for a period of time sufficient to allow the aromatic compound according to formula (I), (II) or (III) and having a pKa of less than 9.0 as described herein to exchange places with at least 15 % of the total exchangeable groups, based on the total number of exchangeable ions in the ion exchange resin. In some embodiments, the ion-exchange resin is soaked in a solution comprising an aromatic compound according to formula (I), (II) or (III) and having a pKa of less than 9.0 as described herein, for at least 5 mins, preferably at least 20 mins, more preferably at least 12 hours and most preferably at least 24 hours. In some embodiments, at least 1 bed volume, preferably at least 2 bed volumes of a solution comprising an aromatic compound according to formula (I), (II) or (III) and having a pKa of less than 9.0 as described herein are circulated through a bed of the ion-exchange resin before the resin is contacted with the heat-transfer fluid. The

solution comprising the aromatic compound according to formula (I), (II) or (III) and having a pKa of less than 9.0 as described herein preferably comprises at least 0.5 wt.% (by total weight of the solution) of an aromatic compound according to formula (I), (II) or (III) and having a pKa of less than 9.0 as described herein, preferably at least 1 wt.%. In some embodiments of the invention, the method is provided further comprising a step of pretreating the ion-exchange resin of the cooling system by contacting the resin with a solution comprising an aromatic compound according to formula (I), (II) or (III) and having a pKa of less than 9.0 as described herein.

***Cooling system of the invention***

In another aspect of the invention, there is provided a cooling system comprising the heat-transfer fluid of the invention wherein the cooling system comprises an ion-exchange resin in contact with the heat-transfer fluid.

The heat-transfer fluid and ion-exchange resin are preferably as has been described herein before. Thus, the embodiments characterising the heat-transfer fluid (in particular the conductivity, the compounds comprised therein, and the concentrations thereof), the methods utilising the heat-transfer fluid and ion-exchange resin described herein in before apply *mutatis mutandis* to the cooling system of the invention.

***Uses of the invention***

In another aspect of the invention, there is provided the use of a heat-transfer fluid comprising an aromatic compound according to formula (I), (II) or (III) and having a pKa of less than 9.0 as described herein, as a heat-transfer fluid in a cooling system comprising an ion-exchange resin, wherein the base fluid consists of water, or an alcohol or mixtures thereof; and wherein the electrical conductivity at 25 °C of the heat-transfer fluid is less than 100 μS/cm, preferably less than 50 μS/cm, more preferably less than 25 μS/cm, more preferably less than 10 μS/cm, most preferably less than 5 μS/cm. The heat-transfer fluid comprising an aromatic compound according to formula (I), (II) or (III) and having a pKa of less than 9.0 is preferably the heat-transfer fluid of the invention which was described in detail herein before and which further comprises a corrosion inhibitor selected from the group consisting of triazoles, thiazoles, triazines and combinations thereof.

The cooling system, heat-transfer fluid and ion-exchange resin are preferably as has been described herein before. Thus, the embodiments characterising the cooling system (in particular further components thereof), the heat-transfer fluid (in particular the conductivity, the compounds comprised therein, and the concentrations thereof) and ion-exchange resin described herein before apply *mutatis mutandis* to the uses of the invention.

The use is preferably as a heat-transfer fluid in a cooling system for an electrical system, wherein the electrical system is preferably as has been described herein before in the context of the method.

In another aspect of the invention there is provided the use of an aromatic compound according to formula (I), (II) or (III) and having a pKa of less than 9.0 as described herein before:

- for prolonging the corrosion inhibiting properties of a heat-transfer fluid comprising a corrosion inhibitor when contacting an ion-exchange resin, preferably when used as a heat-transfer fluid in a cooling system comprising an ion-exchange resin in contact with the heat-transfer fluid;
- for reducing the amount of corrosion inhibitor used in a heat-transfer fluid comprising when contacting an ion-exchange resin, preferably when used as a heat-transfer fluid in a cooling system comprising an ion-exchange resin in contact with the heat-transfer fluid;
- for extending the service life interval of an ion-exchange resin when contacting a heat-transfer fluid by reducing or avoiding uptake of heat-transfer fluid components, preferably when used in a cooling system comprising an ion-exchange resin in contact with the heat-transfer fluid;
- for extending the service life interval of a heat-transfer fluid comprising a corrosion inhibitor (and preferably comprising an alcohol as described herein) and/or an ion-exchange resin contacting the heat-transfer fluid by

    - reducing, postponing or avoiding corrosion;
    - reducing, postponing or avoiding the formation of electrically conductive acids such as glycolates;

  preferably when the heat-transfer fluid is used in a cooling system comprising an ion-exchange resin in contact with the heat-transfer fluid.

The use is preferably as a heat-transfer fluid in a cooling system for an electrical system, wherein the electrical system is preferably as has been described herein before in the context of the method.

## Examples

Electrical conductivity was measured in accordance with ASTM D1125-23 with a Mettler-Toledo SevenExcellence Cond meter S700-Std-Kit electrical conductivity meter equipped with a SevenExcellence Cond meter S700-Std-Kit.

The analysis of anions (glycolate) in the coolant was performed using ion chromatography in accordance with ASTM D5827-22 using a Thermo-Scientific Dionex ICS 6000.

The analysis of organic corrosion inhibitors (benzotriazole, tolyltriazole) was performed using reverse phase HPLC on a Shimadzu Prominence system employing an Agilent Zorbax Eclipse Plus C18 column with UV detection.

Heat-transfer fluids were prepared as is shown in following tables. A triazole was added as a corrosion inhibitor to a water - monoethylene glycol base fluid and a protecting agent was added. pH and electrical conductivity were determined. Thereafter, the heat transfer fluid was contacted with a mixed ion-exchange resin for 3 hours and the pH, electrical conductivity, tolyltriazole concentration and resin appearance were determined.

| | 1 | 2 | 3 | 4 |
|---|---|---|---|---|
| **Deionized water (wt.%)** | 49 | 49 | 49 | 49 |
| **Monoethylene glycol (wt.%)** | 50,66 | 50,41 | 50,16 | 49,91 |
| **Tolyltriazole (wt.%)** | 0.09 | 0,09 | 0,09 | 0,09 |
| **Protecting agent** | 4-Cyanophenol | | | |
| **Protecting agent (wt.%)** | 0,25 | 0,5 | 0,75 | 1 |
| **pH** | 4.9 | 4.9 | 4,8 | 4.7 |
| **econd 25°C (μs/cm)** | 1.1 | 1.5 | 1,8 | 2,1 |
| | 3h exchange with Amberlite™ IRN170 H/OH (2v/v%) | | | |
| **pH** | 4.9 | 4.6 | 4.5 | 4,4 |
| **econd 25°C (μs/cm)** | 0.9 | 1,3 | 1,8 | 2,1 |
| **Tolyltriazole (wt.%, HPLC)** | 0,042 | 0,055 | 0,059 | 0.063 |
| **% Tolyltriazole remaining** | 47% | 61% | 66% | 70% |

| | 5 | 6 | 7 | 8 | 9 |
|---|---|---|---|---|---|
| **Deionized water (wt.%)** | 49 | 49 | 49 | 49 | 49 |
| **Monoethylene glycol (wt.%)** | 50,91 | 50,91 | 50,91 | 50,66 | 49,91 |
| **Tolyltriazole (wt.%)** | 0.09 | 0.09 | 0,09 | 0,09 | 0,09 |
| **Protecting agent** | 2-fluorophenol | | 2-nitrophenol | 4-hydroxybenzaldehyde | |
| **Protecting agent (wt.%)** | 0,25 | 1 | 0,25 | 0,25 | 1 |
| **pH** | 4,8 | 4.7 | 4.5 | 4.6 | 4,3 |
| **econd 25°C (μs/cm)** | 1.2 | 1.4 | 2,4 | 2,1 | 5,4 |
| | | 3h exchange with Amberlite™ IRN170 H/OH (2v/v%) | | | |
| **pH** | 5,3 | 4.9 | 5,0 | 4,8 | 4,3 |
| **econd 25°C (μs/cm)** | 0,5 | 0.9 | 0,8 | 1,2 | 2,9 |
| **Tolyltriazole (wt.%, HPLC)** | 0,014 | 0,043 | 0,042 | 0,041 | 0,061 |
| **% Tolyltriazole remaining** | 15% | 46% | 45% | 44% | 66% |

| | 10 | 11 | 12 | 13 | 14 | 15 |
|---|---|---|---|---|---|---|
| **Deionized water (wt.%)** | 49 | 49 | 49 | 49 | 49 | 49 |
| **Monoethylene glycol (wt.%)** | 50,66 | 49,91 | 49,91 | 50,66 | 49,91 | 50,66 |
| **Tolyltriazole (wt.%)** | 0,09 | 0,09 | 0,09 | 0,09 | 0,09 | 0,09 |
| **Protecting agent** | 2-Hydroxybenzaldehyde | | 4'-Hydroxyacetophenone | | Salicylhydroxamic Acid | Sulfonylbisphenol |
| **Protecting agent (wt.%)** | 0,25 | 1 | 1 | 0,25 | 1 | 0,25 |
| **pH** | 4.9 | 4.5 | 4.5 | 4.9 | 4,3 | 4.9 |
| **eCond 25°C (µs/cm)** | 1,2 | 2,0 | 1,8 | 1,2 | 5,9 | 1,3 |
| | 3h exchange with Amberlite™ IRN170 H/OH (2 v/v%) | | | | | |
| **pH** | 5,2 | 4,8 | 4.6 | 5,1 | 4,4 | 5,1 |
| **eCond 25°C (µs/cm)** | 1,1 | 1,5 | 1,6 | 1,1 | 2,9 | 0,8 |
| **Tolyltriazole (wt.%, HPLC)** | 0,024 | 0,05 | 0,052 | 0,024 | 0,065 | 0,044 |
| **% Tolyltriazole remaining** | 26% | 54°,6 | 55% | 26% | 70% | 48% |

| | 16 | 17 | 18 | 19 | 20 |
|---|---|---|---|---|---|
| **Deionized water (wt.%)** | 49 | 49 | 49 | 49 | 49 |
| **Monoethylene glycol (wt.%)** | 50,66 | 50,41 | 49,91 | 50,66 | 50,41 |
| **Tolyltriazole (wt.%)** | 0,09 | 0,09 | 0,09 | 0,09 | 0,09 |
| **Protecting agent** | Methyl 4-hydroxybenzoate | | | Ethyl 4-hydroxybenzoate | |
| **Protecting agent (wt.%)** | 0,25 | 0,5 | 0,85 | 0,25 | 0,35 |
| **pH** | 5,2 | 5,0 | 4,8 | 5,0 | 5,0 |
| **eCond 25°C (µs/cm)** | 1,4 | 2,1 | 3,5 | 1,0 | 1,0 |
| | 3h exchange with Amberlite™ IRN170 H/OH (2 v/v%) | | | | |
| **pH** | 5.5 | 5,1 | 5,0 | 5,2 | 5,1 |
| **eCond 25°C (µs/cm)** | 0,5 | 0,8 | 1,1 | 0,5 | 0,7 |
| **Tolyltriazole (wt.%, HPLC)** | 0,016 | 0,033 | 0,045 | 0,015 | 0,026 |
| **% Tolyltriazole remaining** | 17% | 36% | 49% | 16% | 28% |

| | 21 | 22 | 23 | 24 |
|---|---|---|---|---|
| **Deionized water (wt.%)** | 49 | 49 | 49 | 49 |
| **Monoethylene glycol (wt.%)** | 50,66 | 50,41 | 50,16 | 49,91 |
| **Tolyltriazole (wt.%)** | 0.09 | 0.09 | 0,09 | 0,09 |
| **Protecting agent** | 4-Cyanophenol | | | |
| **Protecting agent (wt.%)** | 0,25 | 0,5 | 0,75 | 1 |
| **pH** | 4.9 | 4.9 | 4,8 | 4.7 |
| **econd 25°C (µs/cm)** | 1,1 | 1,5 | 1,8 | 2,1 |
| | 3h exchange with another Amberlite™ mixed resin optimized for EV applications (2 v/v%) | | | |
| **pH** | 4,8 | 4.6 | 4.5 | 4.5 |
| **econd 25°C (µs/cm)** | 1,1 | 1,5 | 1,9 | 2,2 |
| **Tolyltriazole (wt.%, HPLC)** | 0,053 | 0,061 | 0,066 | 0,068 |
| **% Tolyltriazole remaining** | 59% | 68% | 73% | 76% |

| | 25 | 26 | 27 | 28 | 29 |
|---|---|---|---|---|---|
| **Deionized water (wt.%)** | 49 | 49 | 49 | 49 | 49 |
| **Monoethylene glycol (wt.%)** | 50,66 | 49,91 | 50,91 | 50,66 | 49,91 |
| **Benzotriazole (wt.%)** | 0.09 | 0.09 | 0,09 | 0,09 | 0,09 |
| **Protecting agent** | 4-Cyanophenol | | 2-fluorophenol | 4-hydroxybenzaldehyde | |
| **Protecting agent (wt.%)** | 0,25 | 1 | 1 | 0,25 | 1 |
| **pH** | 4.9 | 4.7 | 5.5 | 4.7 | 5,2 |
| **econd 25°C (µs/cm)** | 3,8 | 2,1 | 1,7 | 2,1 | 4.4 |
| | 3h exchange with Amberlite™ IRN170 H/OH (2v/v%) | | | | |
| **pH** | 5,0 | 4.4 | 5,1 | 4,8 | 4,4 |
| **econd 25°C (µs/cm)** | 1,0 | 2,2 | 0.9 | 1,2 | 2,9 |
| **Benzotriazole (wt.%, HPLC)** | 0,04 | 0,063 | 0,041 | 0,04 | 0,062 |

(continued)

| | 3h exchange with Amberlite™ IRN170 H/OH (2v/v%) | | | | |
|---|---|---|---|---|---|
| **% Benzotriazole remaining** | 44% | 70% | 43% | 44% | 69% |

| | COMPARATIVE EXAMPLES | | | |
|---|---|---|---|---|
| | **30** | **31** | **32** | **33** |
| **Deionized water (wt.%)** | 49 | 49 | 49 | 49 |
| **Monoethylene glycol (wt.%)** | 50,91 | 49,91 | 49,91 | 50,66 |
| **Tolyltriazole (wt.%)** | 0.09 | 0,09 | 0,09 | 0,09 |
| **Protecting agent** | 4-methoxyphenol (pKa 10.2) | Benzimidazole (pKa 6.0 ) | 2-methyl Benzimidazole (pKa 6.96) | Imidazole (pKa 6.95) |
| **Protecting agent (wt.%)** | 1 | 1 | 1 | 0,25 |
| **pH** | 4,1 | 7,3 | 7,8 | 4,1 |
| **econd 25°C (μs/cm)** | 4.6 | 11.0 | 26,7 | 4.6 |
| | 3h exchange with AmberliteTM IRN170 H/OH (2 v/v%) | | | |
| **pH** | 5.6 | 8,3 | 8,9 | 9,1 |
| **econd 25°C (μs/cm)** | 0,3 | 1,2 | 2,4 | 4.4 |
| **Tolyltriazole (wt.%, HPLC)** | 0,002 | 0 | 0 | 0 |
| **% Tolyltriazole remaining** | 2% | 0% | 0% | 0% |

To show that the aromatic compound according to formula (I) and having a pKa of less than 9.0 do not interfere with the ion-exchange resin's intended function of anion removal (in particular glycolate and formate removal) a test was conducted wherein the aromatic compound according to formula (I) and having a pKa of less than 9.0 was formulated together with glycolate and formate. Concentrations were determined before and after 3h resin exchange.

| | **34** | **35** |
|---|---|---|
| **Deionized water (wt.%)** | 49 | 49 |
| **Monoethylene glycol (wt.%)** | 49,97 | 49, 88 |
| **Glycolic acid (wt.%)** | 0.02 | 0.02 |
| **Formic acid (wt.%)** | 0.01 | 0.01 |
| **Protecting agent** | 4-Hydroxybenzaldehyde | Cyanophenol |
| **Protecting agent (wt.%)** | 1 | 1 |
| **Tolyltriazole** | 0 | 0,09 |
| **pH** | 3,1 | 3,12 |
| **econd 25°C (μs/cm)** | 58,1 | 49, 41 |
| **Glycolate ion (ppm)** | 182 | 200 |
| **Formate ion (ppm)** | 54 | 71 |
| 3h exchange with AmberliteTM IRN170 H/OH (2 v/v%) | | |
| **pH** | 4,0 | 4,0 |

(continued)

| 3h exchange with AmberliteTM IRN170 H/OH (2 v/v%) | | |
|---|---|---|
| **econd 25°C (μs/cm)** | 6,2 | 5.7 |
| **Glycolate ion (ppm)** | 6 | 6 |
| **Formate ion (ppm)** | 4 | 5 |
| **% Tolyltriazole remaining** | NA | 66% |

As can be derived from the above examples and comparative examples, the inclusion of a aromatic compound according to formula (I) and having a pKa of less than 9.0 as described herein does not adversely affect the electrical conductivity, reduces the uptake of the corrosion inhibitors by the resin, but still allows the resin to perform the desired function of removing glycolate ions.

## Claims

**1.** A heat-transfer fluid comprising:

- a base fluid consisting of water, an alcohol or mixtures thereof,
- a corrosion inhibitor selected from the group consisting of triazoles, thiazoles, triazines and combinations thereof, and
- at least one aromatic compound according to formula (I), (II) or (III):

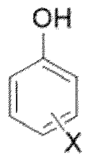
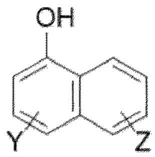
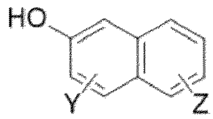

(I) (II) (III)

wherein

X, Y and Z each represent 1 to 3 substituents independently selected from the group consisting of $-R^1$, -F, -Cl, -Br, -I, -OH, $-OR^2$, $-R^3$-OH, $-NO_2$, -CN, -SH, $-SR^2$, -SOsH, - $SO_3R^2$, $-SO_2CF_3$, $-NH_2$, $-NHR^2$, $-N(R^2)_2$, $-N^+(R^2)_3$, -COH, $-COR^4$, $-COR^2$, $-CO_2H$, - $CO_2R^2$, $-CONH_2$, $-(CONH)R^2$, $-(CON)R^2{}_2$, $-(CONR^2)$-OH, -(CONH)-OH, $-(NHCO)R^{2'}$, -(NHCOO)$R^{2'}$, $-(NHCONH)R^{2'}$, $-PH_2O_3$, $-R^3OR^{2'}$, $-R^3(CO)R^{2'}$, $-R^3(COO)R^{2'}$, - $R^3(CONH)R^{2'}$, $-R^3(NHCO)R^{2'}$, $-R^3$(NHCOO)$R^{2'}$, $-R^3(NHCONH)R^{2'}$, $-N=CR^{2'}R^{2'}$, - $N=CR^{2''}$, $-CR^4{}_3$, -N=O, $-R^5-(C_6H_4OH)$;
Y and Z together represent at most 3 substituents;
each occurrence of $R^1$ is individually selected from optionally substituted monovalent hydrocarbon radicals having from 1 to 20 carbon atoms, preferably each occurrence of $R^1$ is individually selected from the group consisting of $C_1$-$C_{20}$ alkyl, $C_1$-$C_{20}$ haloalkyl, $C_1$-$C_{20}$ alkyl alcohol, $C_1$-$C_{20}$ aminoalkyl, $C_2$-$C_{20}$ alkenyl, $C_1$-$C_{20}$ sulfide, more preferably each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;
each occurrence of $R^2$ is individually selected from the group consisting of $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, - $(OCH_2CH_2)_pCH_3$, $-(OCHCH_3CH_2)_qCH_3$, $-(OCH_3)_rCH_3$, preferably each occurrence of $R^2$ is individually selected from the group consisting of $C_1$-$C_{20}$ alkyl, more preferably each occurrence of $R^2$ is individually selected from the group consisting of $C_1$-$C_4$ alkyl;
each occurrence of $R^{2'}$ is individually selected from the group consisting of hydrogen, $C_1$-$C_{20}$ alkyl, $C_1$-$C_{20}$ haloalkyl, $C_1$-$C_{20}$ aminoalkyl, $C_2$-$C_{20}$ alkenyl, $C_1$-$C_{20}$ alkyl alcohol, - $(OCH_2CH_2)_pCH_3$, $-(OCHCH_3CH_2)_qCH_3$, $-(OCH_3)_rCH_3$, preferably each occurrence of $R^{2'}$ is individually selected from the group consisting of hydrogen, $C_1$-$C_{20}$ alkyl, more preferably each occurrence of $R^{2'}$ is individually selected from the group consisting of hydrogen, $C_1$-$C_4$ alkyl;
each occurrence of $R^{2''}$ is individually selected from bivalent $C_2$-$C_8$ alkyl radicals such that $-N=CR^{2''}$ is a cycloalkyl;
each occurrence of $R^3$ is individually selected from the group consisting of bivalent $C_1$-$C_{20}$ alkyl radicals,

preferably each occurrence of $R^3$ is individually selected from the group consisting of bivalent $C_1$-$C_8$ alkyl radicals, more preferably each occurrence of $R^3$ is individually selected from the group consisting of bivalent $C_1$-$C_4$ alkyl radicals;

each occurrence of $R^4$ is individually selected from the group consisting of halogens, preferably each occurrence of $R^4$ is individually selected from the group consisting of-F, -Cl, and -Br, more preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals;

**characterized in that** a pKa value of the aromatic compound is less than 9.0 and the electrical conductivity of the heat-transfer fluid is less than 100 μS/cm, preferably less than 50 μS/cm, more preferably less than 25 μS/cm, more preferably less than 10 μS/cm, most preferably less than 5 μS/cm.

**2.** The heat-transfer fluid according to claim 1, wherein the base fluid comprises an alcohol, and wherein the alcohol is selected from monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1 ,2,6-hexanetriol, trimethylolpropane, methoxyethanol, glycerol and combinations thereof.

**3.** The heat-transfer fluid according to claim 2, wherein the weight ratio of the aromatic compound to the alcohol, by total weight of the heat-transfer fluid, is between 1:750 to 1:2, preferably between 1:500 to 1:10, preferably between 1:400 to 1:20 and most preferably between 1:300 to 1:30.

**4.** The heat-transfer fluid according to any one of the preceding claims, wherein the concentration of the aromatic compound is least 0.05 wt.%, by total weight of the heat-transfer fluid, preferably at least 0.1 wt.%, more preferably at least 0.2 wt.%, more preferably at least 0.25 wt.%, more preferably at least 0.4 wt.%.

**5.** The heat-transfer fluid according to any one of the preceding claims, wherein the weight ratio of the aromatic compound to the corrosion inhibitor, by total weight of the heat-transfer fluid, is at least 1:2, preferably at least 1:1, more preferably at least 2:1.

**6.** The heat-transfer fluid according to any one of the preceding claims, wherein the aromatic compound has a molecular weight of less than 500 g/mol, preferably less than 400 g/mol, preferably less than 200 g/mol.

**7.** The heat-transfer fluid according to any one of the previous claims, wherein the aromatic compound has a single exchangeable hydrogen, the pKa of this exchangeable hydrogen being less than 9.0.

**8.** The heat-transfer fluid according to any one of the previous claims wherein

X, Y and Z each represent 1 to 3 substituents independently selected from the group consisting of $-R^1$, -F, -Cl, -Br, -I, -OH, $-OR^2$, $-R^3$-OH, $-NO_2$, -CN, $-SO_3H$, $-SO_3R^2$, - $SO_2CF_3$, $-N^+(R^2)_3$, -COH, $-COR^4$, $-COR^2$, $-CO_2H$, $-CO_2R^2$, $-CONH_2$, $-(CONH)R^2$, - $(CON)R^2{}_2$, $-(CONR^2)$-OH, -(CONH)-OH, $-N=CR^{2'}R^{2'}$, $-N=CR^{2''}$, $-CR^4{}_3$, -N=O, $-R^5-(C_6H_4OH)$;

Y and Z together represent at most 3 substituents;

each occurrence of $R^1$ is individually selected from the group consisting of $C_1$-$C_6$ alkyl, $C_1$-$C_6$ haloalkyl, $C_1$-$C_6$ alkyl alcohol, $C_1$-$C_6$ aminoalkyl, $C_2$-$C_6$ alkenyl, $C_1$-$C_6$ sulfide;

each occurrence of $R^2$ is individually selected from the group consisting of $C_1$-$C_4$ alkyl;

each occurrence of $R^{2'}$ is individually selected from the group consisting of hydrogen, $C_1$-$C_4$ alkyl;

each occurrence of $R^{2''}$ is individually selected from bivalent $C_2$-$C_8$ alkyl radicals such that $-N=CR^{2''}$ is a cycloalkyl;

each occurrence of $R^4$ is individually selected from the group consisting of -F, -Cl, and -Br, preferably each occurrence of $R^4$ is individually selected from the group consisting of -F and -Cl;

each occurrence of $R^5$ is individually selected from the group consisting of $-SO_2-$, -S-, bivalent $C_1$-$C_8$ alkyl radicals, more preferably each occurrence of $R^5$ is individually selected from the group consisting of $-SO_2-$, -S-, bivalent $C_1$-$C_4$ alkyl radicals.

**9.** The heat-transfer fluid according to any one of the previous claims wherein the aromatic compound is selected from

those compounds according to formula (I) which have a pKa value of less than 9.0, preferably less than 8.8, and wherein

X represents 1 or 2 substituents independently selected from the group consisting of - F, -Cl, -Br, -I, $-NO_2$, -CN, $-SO_3H$, $-SO_3R^2$, $-SO_2CF_3$, -COH, $-COR^2$, $-CO_2H$, $-CO_2R^2$, - $CONH_2$, $-(CONR^2)-OH$, -(CONH)-OH;
each occurrence of $R^2$ is individually selected from the group consisting of $C_1$-$C_4$ alkyl.

**10.** The heat-transfer fluid according to any one of the preceding claims, having a pH in the range of 3 to 10, preferably in the range of 3 to 9, most preferably in the range of 3 to 7.

**11.** The heat-transfer fluid according to any one of the preceding claims, wherein the fluid further comprises one or more additives selected from the group consisting of antioxidants, antiwear agents, surfactants, scale inhibitors, antifoam agents, dyes and combinations thereof in an amount within the range of 0.001-10 wt.% (by total weight of the heat-transfer fluid).

**12.** A method for exchanging heat, the method comprising the steps of:

a. providing a heat-transfer fluid according to any one of claims 1 to 11;
b. providing a cooling system configured for thermally contacting the heat-transfer fluid with an electrical system, the cooling system comprising an ion-exchange resin;
c. transferring heat from the electrical system to the heat-transfer fluid; and
d. contacting the heat-transfer fluid with the ion-exchange resin.

**13.** The method according to claim 12, wherein the ion-exchange resin is a mixed resin comprising anion-exchange and cation-exchange functionalities.

**14.** The use of a heat-transfer fluid comprising an aromatic compound according to formula (I), (II) or (III) as defined in claim 1, as a heat-transfer fluid in a cooling system comprising an ion-exchange resin; wherein the electrical conductivity at 25 °C of the heat-transfer fluid is less than 100 μS/cm, preferably less than 50 μS/cm, more preferably less than 25 μS/cm, more preferably less than 10 μS/cm, most preferably less than 5 μS/cm.

**15.** The use of an aromatic compound according to formula (I), (II) or (III) as defined in claim 1:

• for prolonging the corrosion inhibiting properties of a heat-transfer fluid comprising a corrosion inhibitor when contacting an ion-exchange resin, preferably when used as a heat-transfer fluid in a cooling system comprising an ion-exchange resin in contact with the heat-transfer fluid;
• for reducing the amount of corrosion inhibitor used in a heat-transfer fluid comprising when contacting an ion-exchange resin, preferably when used as a heat-transfer fluid in a cooling system comprising an ion-exchange resin in contact with the heat-transfer fluid;
• for extending the service life interval of an ion-exchange resin when contacting a heat-transfer fluid by reducing or avoiding uptake of heat-transfer fluid components, preferably when used in a cooling system comprising an ion-exchange resin in contact with the heat-transfer fluid;
• for extending the service life interval of a heat-transfer fluid comprising a corrosion inhibitor (and preferably comprising an alcohol as described herein) and/or an ion-exchange resin contacting the heat-transfer fluid by

◦ reducing, postponing or avoiding corrosion;
◦ reducing, postponing or avoiding the formation of electrically conductive acids such as glycolates;
preferably when the heat-transfer fluid is used in a cooling system comprising an ion-exchange resin in contact with the heat-transfer fluid.

Europäisches Patentamt
European Patent Office
Office européen des brevets

# EUROPEAN SEARCH REPORT

Application Number
EP 24 19 6212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 278 403 A (JIANGXI CHIEF IND CO LTD) 20 August 2021 (2021-08-20)<br>* claims 1-8; examples *<br>----- | 1-11,15 | INV.<br>C09K5/10<br>C23F11/12<br>H01M8/04029 |
| X | WO 2024/115457 A1 (ARTECO N V [BE]) 6 June 2024 (2024-06-06)<br>* paragraphs [0001], [0077], [0079]; claims 1-14 *<br>----- | 1-15 | |

TECHNICAL FIELDS SEARCHED (IPC)

C09K
C23F
H01M

The present search report has been drawn up for all claims

1

| Place of search | Date of completion of the search | Examiner |
|---|---|---|
| The Hague | 9 January 2025 | Martinez Marcos, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 6212

This annex lists the patent family members relating to the patent documents cited in the above-mentioned European search report. The members are as contained in the European Patent Office EDP file on
The European Patent Office is in no way liable for these particulars which are merely given for the purpose of information.

09-01-2025

| Patent document cited in search report | Publication date | Patent family member(s) | Publication date |
|---|---|---|---|
| CN 113278403 A | 20-08-2021 | NONE | |
| WO 2024115457 A1 | 06-06-2024 | WO 2024115455 A1 | 06-06-2024 |
| | | WO 2024115457 A1 | 06-06-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8951689 B2
- EP 1501140 A1